(19) **Europäisches Patentamt / European Patent Office / Office européen des brevets**

(11) **EP 4 084 972 B1**

(12) **FASCICULE DE BREVET EUROPEEN**

(45) Date de publication et mention de la délivrance du brevet:
**24.07.2024 Bulletin 2024/30**

(21) Numéro de dépôt: **20845172.4**

(22) Date de dépôt: **11.12.2020**

(51) Classification Internationale des Brevets (IPC):
**B60C 23/04** *(2006.01)*    **B60C 23/06** *(2006.01)*
**B60W 40/13** *(2012.01)*

(52) Classification Coopérative des Brevets (CPC):
**B60C 23/064; B60C 23/06; B60W 40/13;**
B60C 2019/004

(86) Numéro de dépôt international:
**PCT/FR2020/052383**

(87) Numéro de publication internationale:
**WO 2021/136892 (08.07.2021 Gazette 2021/27)**

(54) **PROCEDE D'OBTENTION DE LA CHARGE APPLIQUEE A UN PNEUMATIQUE EN ROULAGE**

VERFAHREN ZUR FESTELLUNG DER BELASTUNG EINES FAHRENDEN REIFENS

DETERMINING METHOD OF THE APPLIED LOAD ON A DRIVEN TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2019 FR 1915728**

(43) Date de publication de la demande:
**09.11.2022 Bulletin 2022/45**

(73) Titulaire: **COMPAGNIE GENERALE DES ETABLISSEMENTS MICHELIN**
**63000 Clermont-Ferrand (FR)**

(72) Inventeur: **ALFF, Denis**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 2 774 784      WO-A1-2012/091719**
**WO-A1-2019/020536     FR-A1- 2 930 196**

## Description

### Domaine de l'invention

La présente invention concerne les méthodes d'obtention de la charge appliquée à une enveloppe pneumatique d'un ensemble monté en condition de roulage.

### Arrière-plan technologique

Pour le domaine des dispositifs et des méthodes de mesure de la charge appliquée à l'ensemble monté, ceux-ci servent principalement à caractériser le résultat de la déformation de l'enveloppe pneumatique due à la charge appliquée. Ainsi, les dispositifs et les méthodes cherchent à caractériser principalement l'empreinte au sol du pneumatique que l'on nomme aire de contact. En effet, la géométrie ou la répartition de contraintes au sein de cette aire de contact sont directement liées à la charge appliquée sur l'enveloppe pneumatique moyennant éventuellement la pression de gonflage de l'ensemble monté.

Cette aire de contact qui ne représente qu'un pourcentage minime de la périphérie de l'enveloppe pneumatique en condition monté-gonflé est aussi très sensible à divers paramètres comme la macrorugosité du sol ou les irrégularités présentes sur le sol. En effet, la zone de contact réelle entre l'enveloppe pneumatique et le sol peut alors correspondre aux sommets des indenteurs caractérisant la macrorugosité du sol. Ainsi, la répartition des contraintes dans l'enveloppe pneumatique est modifiée pouvant influer sur les dimensions de l'aire de contact.

De plus, la détermination précise des dimensions de l'aire de contact est difficile à obtenir en condition de roulage. Classiquement en roulage, l'aire de contact se caractérise à l'aide de signaux représentatifs de la déformation de l'enveloppe pneumatique. Ceux-ci se manifestent par un saut important des grandeurs observées traduisant le passage de l'enveloppe pneumatique d'une forme toroïdale libre à une forme toroïdale partiellement écrasée à déplacement imposé. En effet, le sol constitue alors une condition aux limites de type déplacement imposé pour les points matériels de l'enveloppe pneumatique. Il est alors difficile d'identifier les points d'entrée ou de sortie exacts de l'aire de contact. De plus, l'aire de contact ne représente qu'une partie du développement de l'enveloppe pneumatique classiquement entre 1/20 et 1/10 du développement de la bande de roulement. Afin d'obtenir une image précise de cette portion du pneumatique, il faut disposer d'une discrétisation fine au niveau du signal de déformation. Ceci nécessite des espaces mémoires conséquents, des fréquences spatiales d'échantillonnage élevées au moins au niveau de l'aire de contact ce qui est consommateur en énergie.

On connait dans l'état de la technique, le document WO2017/032466A1 qui divulgue un dispositif de caractérisation de la charge appliquée à un ensemble monté sur la base d'un accéléromètre monté sur le pneumatique.

D'un autre coté, le document EP 2 774 784 A1 divulgue une détermination de la charge d'un pneumatique en évaluant l'empreinte générée via l'usage d'un accéléromètre.

Quant au document WO 2012/091719 A1, il divulgue une détermination de la charge d'un pneumatique en évaluant l'empreinte générée via un capteur piézoélectrique , du même déposant que l'application courante. Le document

WO 2019/020536 A1 divulgue une détermination de la charge d'un pneumatique en évaluant l'empreinte générée. Le document FR 2 930 196 A1 divulgue une détermination du comportement d'un pneumatique, du même déposant que l'application courante.

La présente invention porte sur un procédé qui permet une évaluation précise de la charge appliquée à l'enveloppe pneumatique en condition de roulage quel que soit la nature de la chaussée tout en économisant l'énergie du dispositif de mesure ce qui permet de traiter la majorité ou la totalité des opérations élémentaires au niveau du dispositif de mesure lui-même.

### Description de l'invention

L'invention porte sur une méthode d'obtention d'une charge appliquée à une enveloppe pneumatique, comme définie dans la revendication indépendante 1 ci-jointe, dans un état monté sur roue afin de constituer un ensemble monté. L'enveloppe pneumatique ayant un sommet, deux flancs et deux bourrelets de révolution autour d'un axe naturel de rotation et un plan médian, l'intersection du plan médian et de l'axe naturel de rotation définit un centre roue. La méthode comprend les étapes suivantes :

- Fixer au moins un capteur sur l'enveloppe pneumatique au droit du sommet ayant une position radiale R par rapport à l'axe naturel de rotation dans son état monté apte à générer au moins un signal de sortie proportionnel à l'accélération subie par le capteur dans l'enveloppe pneumatique ;

- Mettre l'ensemble monté en condition de roulage à une vitesse de rotation W, soumise à une charge Z ;

- Réaliser l'acquisition d'au moins un premier signal d'abscisse u comprenant au moins l'amplitude de l'accélération selon la direction normale au sommet lors d'un roulage à la vitesse de rotation W ;

- Déterminer une accélération de référence $\gamma^{reference}$ fonction de la vitesse de rotation W et de la position du au moins un capteur ;

- Identifier une première série d'incréments I, correspondant à l'abscisse u du au moins un premier signal où le premier signal franchit une valeur seuil B.

- Délimiter le premier signal entre un premier incrément $I_{min}$ et un second incrément $I_{max}$ afin de construire un signal tour de roue $Sig^{TdR}$;

- Définir au moins une première densité d'énergie S qui est fonction du signal tour de roue $Sig^{TdR}$, de l'accélération de référence $\gamma^{reference}$, nommée $S^+$ lorsque le signal tour de roue est supérieur à un seuil A, ou nommée $S^-$ lorsque le signal tour de roue est inférieure ou égale audit seuil A ;

- Identifier la déformation de l'enveloppe pneumatique $Def_\%$ générée par la charge comme une fonction de l'accélération de référence $\gamma^{reference}$ et de la première densité d'énergie S ;

- Déterminer la charge Z appliquée à l'ensemble monté à l'aide d'une fonction bijective F comprenant au moins comme paramètre la déformation de l'enveloppe pneumatique $Def_\%$.

Comme dans l'état de la technique, il faut obtenir l'accélération d'un point matériel du pneumatique. Ici, il est important que l'accélération corresponde à sa composante normale au sommet puisque c'est cette composante qui est l'information principale de la déformation de l'enveloppe pneumatique. De plus il est préférable que cela soit l'accélération absolue du point matériel et non pas seulement sa composante alternative autour de la composante continue comme dans certaines méthodes de l'état de l'art. Cependant, si l'accélération délivrée par le capteur ne comprend pas la composante continue, il faut ajouter artificiellement cette composante continue comme étant l'accélération centrifuge résultant d'une position radiale R et d'une vitesse de rotation W. Ensuite, il faut délimiter le signal d'accélération les instants où le premier signal franchit l'aire de contact au travers d'un seuil B. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. Ainsi, le premier signal passera nécessairement au niveau d'un seuil. En fait, le premier signal passera à deux reprises au niveau de ce seuil par tour de roue. Ces passages correspondent schématiquement à la zone d'entrée et de sortie de l'aire de contact. Le signal tour de roue $Sig^{TdR}$ ainsi construit ne correspond pas nécessairement à un nombre entier de tour de roue.

Puis, on définit la vitesse de rotation W comme étant la vitesse de rotation moyenne sur la durée du signal tour de roue si la variation de vitesse de rotation est faible sur le signal tour de roue, c'est-à-dire inférieure à 15% par rapport à la vitesse moyenne. Si l'enveloppe pneumatique est à vitesse constante, c'est préférable car on élimine de nombreuses sources d'erreurs potentielles. Ainsi, la méthode est opérationnelle que la vitesse de rotation W de l'enveloppe pneumatique soit constante ou variable. L'accélération de référence $\gamma^{reference}$ correspond alors à l'accélération centrifuge subie par le capteur.

Ensuite, la simple comparaison du niveau d'accélération absolue du signal tour de roue $Sig^{TdR}$ avec une accélération de référence $\gamma^{reference}$ liée à la position radiale du capteur et au niveau de vitesse de rotation W permet de générer une densité d'énergie S. L'amplitude du signal tour de roue par rapport à un seuil A qui peut, par exemple, simplement être l'accélération de référence $\gamma^{reference}$ génère potentiellement un doublet de densités d'énergie de déformation positive et négative (S+, S-) à partir du signal tour de roue. Ainsi, la méthode ne fait que définir une densité d'énergie de déformation de l'enveloppe pneumatique et la distribuer dans deux sous-ensembles selon sa position par rapport au seuil A. Ce sont des opérations simples à réaliser qui consomment peu de ressources. Bien entendu, pour être représentative, la méthode part de l'accélération absolue qui permet une comparaison aisée avec l'accélération de référence $\gamma^{reference}$ pour identifier le doublet de densités d'énergie.

Puis, la méthode détermine la déformation de l'enveloppe pneumatique comme une fonction de la densité d'énergie S calculée qu'elle norme sur la durée du signal tour de roue $Sig^{TdR}$ qui subirait une accélération de référence $\gamma^{reference}$. Ainsi, la déformation $Def_\%$ représente une normalisation de l'énergie de déformation sur un tour de roue physique de l'enveloppe pneumatique. De ce fait, on identifie un invariant énergétique lié à la déformation de l'enveloppe pneumatique soumis à une charge en condition de roulage. Bien entendu, une partie d'un seul tour de roue est nécessaire à la méthode. Cependant de façon préférentielle, le nombre de tours de roue sera d'au moins 5, voire 10 afin de moyenner les résultats ce qui permettra de s'affranchir de phénomènes aléatoires sur le signal comme par exemple des obstacles sur la chaussée sur laquelle roule l'enveloppe pneumatique. Ainsi, la précision de la méthode s'en trouve améliorée en mode industriel.

Enfin, la méthode détermine la charge Z que subit l'ensemble monté, et par voie de conséquence la charge Z qui est soumise à l'enveloppe pneumatique lorsque la roue est considérée comme rigide par rapport à l'enveloppe pneumatique, à l'aide d'une fonction bijective F liant la charge Z à la déformation de l'enveloppe pneumatique $Def_\%$. Le fait que la déformation de l'enveloppe pneumatique soit évaluée sur la réponse d'un signal de mesure potentiellement bien plus grand que la simple traversée de l'aire de contact, comme lorsque l'on évalue la déformation $Def_\%$ à l'aide de la densité d'énergie $S^+$ permet de gagner en précision sur cette déformation avec une discrétisation spatiale du signal tour de roue $Sig^{TdR}$ bien moins élevée que dans l'état de la technique. Ceci est moins coûteux en énergie et en espace mémoire ce qui permet de réaliser cette détermination de la charge Z au niveau du dispositif de mesure embarquée sur l'enveloppe pneumatique comme un TMS (acronyme anglais de « Tyre Monitoring Sensor »). Et même si on se limite à la densité d'énergie $S^-$, la discrétisation spatiale de la méthode n'a pas besoin d'être aussi fine que celle de l'état de la technique puisque l'on ne cherche pas à identifier la dimension de l'aire de contact, mais juste à délimiter les deux zones de l'enveloppe pneumatique correspondant à une condition de déplacement imposée ou de charge imposée.

Avantageusement, l'acquisition du premier signal est effectuée pour une vitesse de rotation W supérieure ou égale à une vitesse de rotation seuil $W_{seuil}$ définie par la formule suivante :

$$W_{seuil} = \frac{12}{\sqrt{Dev}} \quad ;$$

Où Dev est le développement de l'enveloppe pneumatique.

Ainsi, si la vitesse de roulage W est au-delà de la valeur seuil, il est aisé de dissocier le signal tour de roue par rapport à la valeur seuil A et ce quels que soient les aléas dans le signal tour de roue $Sig^{TdR}$ comme, par exemple, une forte macrorugosité de la chaussée, des perturbations électromagnétiques dans la chaîne de mesure, des vibrations au niveau de l'enveloppe pneumatique. De plus, cela permet aussi d'identifier plus nettement le signal de la gravité dans le signal tour de roue.

Selon un mode de réalisation préférentiel, on identifie la première série d'incréments I par la combinaison des étapes suivantes :

- Définir une valeur seuil B qui est fonction du au moins un maximum d'au moins une partie du premier signal ;
- Déterminer un second signal d'abscisse u comme une fonction de la au moins une partie du premier signal et de la valeur seuil B ;
- Identifier la première série des incréments I, correspondant à l'abscisse u du au moins une partie du premier signal et du second signal où le second signal franchit un seuil E.

Dans ce mode de réalisation, on n'emploie que le premier signal pour identifier les incréments représentatif du passage du capteur dans l'aire de contact. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. La méthode propose de construire un second signal lié au premier signal et à un seuil B qui permettra d'effectuer des opérations mathématiques et logiques élémentaires.

Ainsi, le premier signal passera nécessairement au niveau d'une valeur seuil B. En fait, le premier signal passera à deux reprises au niveau de ce seuil par tour de roue. En prenant en compte le franchissement, on a un détecteur de passage dans l'aire de contact à partir du premier signal du capteur. Du fait de la discrétisation spatiale grossière qui peut être employée, cette détection est suffisante pour la méthode d'évaluation de la charge appliquée à l'enveloppe pneumatique.

Pour déterminer le seuil B, il est proposé d'effectuer une détection sur une partie amont du premier signal pour identifier une valeur MAX dont dépendra le seuil B. En effet, l'accélération radiale juste avant et après l'aire de contact, atteint une valeur maximale de façon continue qui est fonction des conditions de roulage de l'enveloppe pneumatique, notamment sur un signal corrigée de la gravité terrestre. Le seuil B sera alors fonction d'une valeur MAX qui s'approchera de cette valeur maximale selon la discrétisation du premier et second signal. Il n'est pas nécessaire d'être précis sur cette valeur MAX pour que la méthode converge.

Très préférentiellement, la valeur seuil B est une valeur compris entre 0,1 et 0.5 du au moins un maximum d'au moins une partie du premier signal.

Préférentiellement, le second signal étant obtenu par la différence entre le premier signal et la valeur seuil B, le seuil E est la valeur nulle ou le second signal étant obtenu par le rapport entre le premier signal et la valeur seuil B, le seuil E est la valeur unité.

Ce sont deux exemples simples de second signal permettant d'effectuer des opérations simples et élémentaires pour identifier les incréments du signal discrétisé représentatifs du passage du capteur dans l'aire de contact lors du roulage de l'enveloppe pneumatique.

Selon un autre mode de réalisation, l'identification des incréments I comprend les étapes suivantes ;

- Créer une seconde série d'incréments J correspondant à l'abscisse u intermédiaire, préférentiellement située entre un huitième et sept huitième, très préférentiellement située à la longueur médiane, de la longueur définie par les abscisses u des incréments I de parités identiques et consécutifs,
- Construire le signal tour de roue $Sig^{TdR}$ entre un premier incrément $J_{min}$ et un second incrément $J_{max}$.

C'est un processus complémentaire de l'identification des incréments I représentatifs du passage dans l'aire de contact. Cette fois, on crée une série d'incréments J situés entre les incréments I pairs ou impairs. En effet, la méthode d'identification des incréments I donne deux incréments par tour de roue traduisant l'entrée et la sortie de l'aire de contact. Lors du roulage à la vitesse de rotation W, le sens de rotation de l'enveloppe pneumatique n'est pas modifié. Par conséquent, la parité des incréments I donne directement une information tour de roue. L'objectif est ici de commencer le signal tour de roue $Sig^{TdR}$ à l'opposé de l'aire de contact dans une zone la moins perturbée par l'aire de contact. Ainsi, les erreurs de discrétisation spatiale de la méthode seront moins élevées puisque le signal de l'accélération radiale est sensiblement autour de l'accélération de référence à l'opposé de l'aire de contact. On a la possibilité de choisir soit les incréments I pairs ou impairs pour déterminer les incréments J qui serviront alors à délimiter le signal tour de roue $Sig^{TdR}$ qui sera construit sur un nombre entier de tours de roue.

Avantageusement, le seuil A est fonction de l'accélération de référence $\gamma^{reference}$.

Le seuil A permet de dissocier les densités d'énergie positif et négatif de la méthode.

En effet, tout signal de mesure est bruité. Il est possible de filtrer, ou lisser ce signal en temps réel, mais au risque de perdre de l'information, notamment la dynamique du passage dans l'aire de contact. Par définition, ce bruit est de valeur moyenne sensiblement nulle. Et si, en théorie, il ne doit pas ou peu affecter le calcul des densités d'énergie $S^+$ et $S^-$, il est susceptible de perturber la classification dans $S^+$ ou $S^-$, et donc fausser le résultat final. Ce seuil A a pour objectif de permettre de ranger les variations entre le signal de tour de roue et l'accélération de référence selon l'une ou l'autre des densités d'énergie. Ce seuil A permet de tenir compte des variations du signal de tour de roue dues à des perturbations et un mauvais rapport signal/bruit, ces perturbations pouvant provenir de la macrorugosité de la route, d'obstacles ponctuels rencontrés sur la route, des vibrations propres au pneumatique ou au véhicule sur lequel il est monté, ou des petits dysfonctionnements électromagnétiques de la chaîne de mesure inhérents à la nature et la qualité des composants électroniques utilisés. Comme le signal tour de roue et l'accélération de référence dépendent de la vitesse de rotation W de l'ensemble monté et de la position radiale du capteur, il semble opportun de rendre dépendant la valeur seuil A de l'accélération de référence pour s'affranchir de ces perturbations qui pourrait polluer la précision souhaitée.

Très avantageusement, le seuil A est fonction d'un facteur C selon la formule suivante :

$$A = C * \gamma^{Reference}$$

Préférentiellement, le facteur C est supérieur ou égal à 0,5 et inférieur ou égal à 0,9.

Cette valeur du facteur C permet à la fois de dissocier la densité d'énergie positive et négative sur le signal tour de roue. En effet, lors du passage dans l'aire de contact, le signal tour de roue tend vers zéro. De plus, la transition au niveau de l'entrée et la sortie de l'aire de contact est très forte, très rapide et d'un profil toujours sensiblement identique. Ainsi, une valeur de 0,5 permet de ne pas trop diminuer le nombre de points de mesure qui seront affectés à la densité d'énergie négative $S^-$ ou augmenter ceux qui sont affectés à $S^+$. En effet, l'objectif de la méthode est d'employer une discrétisation spatiale peu élevée. Généralement, peu de points de mesure sont situées au niveau de la zone de transition. De ce fait, l'erreur commise sur $S^-$ et sur $S^+$ est minime voire nulle si aucun point de mesure ne se trouve dans la zone de sélection correspondante à C entre 0,5 et 0,9. L'erreur sera en outre répétitive si on utilise un coefficient C figé et un seuil A proportionnel à $\gamma^{reference}$ pour toutes les caractérisations, et l'erreur éventuellement induite sera reproductible donc transparente par rapport à un niveau de référence défini par ailleurs.

A l'inverse, une valeur de C égale à un est la valeur théorique qui permet de dissocier les points entre les deux densités d'énergie possibles. Si cela est idéal sur des sols lisses avec des conditions optimales minimisant les perturbations sur la chaîne de mesure. La moindre perturbation peut impacter la précision requise sur le résultat.

Selon un premier mode de réalisation, l'accélération de référence $\gamma^{reference}$, fonction de la position radiale R du au moins un capteur, est définie par la formule suivante :

$$\gamma^{reference} = R * W^2$$

Si les opérations mathématiques sont déportées, il est possible de définir l'accélération de référence $\gamma^{reference}$ comme l'accélération centrifuge subie par le capteur. De ce fait, il faut avoir accès à la position radiale R du capteur et à la vitesse de rotation W de l'enveloppe pneumatique.

La position radiale R du capteur peut être déterminée par une échelle de cote connaissant les dimensions de l'enveloppe pneumatique, les caractéristiques de la structure de l'enveloppe pneumatique et les caractéristiques de l'organe électronique accueillant le capteur.

La vitesse de rotation W peut aussi être estimée à l'aide d'un autre signal comme un top tour par exemple ou le nombre de points d'acquisition entre 2 fronts de même nature (ou 2 Incréments successifs I de parité identiques), connaissant la fréquence d'acquisition. La connaissance du développement de l'enveloppe pneumatique et du temps écoulé entre deux tops tours donnent une première évaluation de la vitesse de rotation W par tour de roue.

C'est une première évaluation de l'accélération de référence $\gamma^{reference}$.

Selon un second mode de réalisation, la détermination de l'accélération de référence $\gamma^{reference}$ est définie comme la valeur moyenne de au moins une partie du premier signal compris entre deux incréments de parité identique appartenant à la même série d'incrément.

Dans ce cas, si les opérations sont faites en enregistrement la totalité du premier signal sur au moins un tour, il est possible de remonter à l'information de l'accélération de référence. De plus, si on a calculé les incréments J selon le mode de réalisation associée, on a naturellement identifié un tour de roue. Dans le cas d'une identification à l'aide des incréments J, les erreurs de discrétisation seront potentiellement moins importantes en raison de la soudaineté des événements liés à l'entrée et la sortie de l'aire de contact comme dans le cas des incréments I.

Préférentiellement, ayant phasé le signal tour de roue $Sig^{TdR}$ par rapport à une position angulaire de l'enveloppe pneumatique, une correction Corr est apportée au signal tour de roue $Sig^{TdR}$ pour prendre en compte l'effet de la gravité terrestre.

La correction de la gravité terrestre permet de minimiser l'erreur sur la déformation de l'enveloppe pneumatique en particulier pour les vitesses de roulage W basses. En effet, le capteur, lors du roulage de l'enveloppe pneumatique, fait une révolution autour de l'axe naturel de rotation. Le signal de sortie du capteur étant proportionnel à l'accélération radiale sera pollué par la gravité terrestre. Sur un tour de roue, la gravité terrestre va générer un signal sinusoïdal d'amplitude g qui est fonction de l'altitude du capteur dans le repère de la Terre. Il faut donc retirer ce signal parasite Corr du signal tour de roue $Sig^{TdR}$ ce qui nécessite un recalage du signal tour de roue par rapport à une position angulaire de l'enveloppe pneumatique.

Bien entendu, plus la vitesse de rotation W de l'enveloppe pneumatique est élevée, plus l'accélération centrifuge subie par le capteur devient prédominant par rapport à ce signal parasite.

Selon un mode de réalisation préférentiel, la méthode comprenant les étapes suivantes :

- Déterminer un premier nombre de passage $N^{Pas}$ du signal tour de roue $Sig^{TdR}$ comme la partie entière par excès de la moitié de la différence entre le second incrément ($J_{max}$, $I_{max}$) et le premier incrément ($I_{min}$, $J_{min}$) du signal tour de roue $Sig^{TdR}$ ;
- Déterminer un second nombre de passage $N'^{Pas}$ du signal tour de roue $Sig^{TdR}$ comme la partie entière de la moitié de la différence entre le second incrément ($J_{max}$, $I_{max}$) et le premier incrément ($I_{min}$, $J_{min}$) du signal tour de roue $Sig^{TdR}$ ;
- Si le premier incrément ($I_{min}$) est un incrément correspondant à l'abscisse u du premier signal où le premier signal franchit la valeur seuil B en descente, alors la méthode comprend l'étape suivante :

    - Identifier la déformation de l'enveloppe pneumatique $Def_\%$ soumise à une charge par les formules suivantes :

$$Def_\% = \frac{(S^-)}{(N^{Pas} * \gamma^{Reference})} = \frac{(S^+)}{(N'^{Pas} * \gamma^{Reference})} = \frac{1}{2} * \left[ \left( \frac{(S^+)}{(N'^{Pas} * \gamma^{Reference})} \right) + \left( \frac{(S^-)}{(N^{Pas} * \gamma^{Reference})} \right) \right]$$

    - Sinon, la méthode comprend l'étape suivante :

        - Identifier la déformation de l'enveloppe pneumatique Def% soumise à une charge par les formules suivantes :

$$Def_\% = \frac{(S^+)}{(N^{Pas} * \gamma^{Reference})} = \frac{(S^-)}{(N'^{Pas} * \gamma^{Reference})} = \frac{1}{2} * \left[ \left( \frac{(S^+)}{(N^{Pas} * \gamma^{Reference})} \right) + \left( \frac{(S^-)}{(N'^{Pas} * \gamma^{Reference})} \right) \right]$$

Ici, la détermination de la déformation de l'enveloppe pneumatique Def$_\%$ nécessite tout d'abord d'identifier le nombre de passage dans l'aire de contact du capteur dans le signal tour de roue Sig$^{TdR}$. Comme le signal tour de roue Sig$^{TdR}$ n'est pas forcément délimité sur un nombre entier de tours de roue, on déterminer à la fois N$^{pas}$ et N'$^{pas}$. En particulier, il n'est pas nécessaire que le traitement soit fait sur un signal excédant un tour de roue, un signal comprenant au moins une partie du tour de roue comprenant le passage dans l'aire de contact ou son complémentaire suffit.

Ensuite, il faut déterminer si le premier incrément I du signal tour de roue est sur une entrée ou une sortie de l'aire de contact. Cela s'effectue en comparant la valeur du premier incrément situé après le premier incrément I du signal tour de roue Sig$^{TdR}$ en le comparant avec la valeur seuil B.

Enfin, la déformation de l'enveloppe pneumatique Def% peut être déterminée soit uniquement à partir de la densité d'énergie négative, soit de la densité d'énergie positive soit deux densités.

Selon un mode de réalisation particulier, N$^{pas}$ et N'$^{pas}$ étant égaux entre eux et étant égaux au nombre de tour de roue N$^{TdR}$, la déformation de l'enveloppe pneumatique Def$_\%$ soumise à une charge est déterminée par l'une des formules suivantes :

$$Def_\% = \frac{(S)}{(N^{TdR} * \gamma^{Reference})}$$

,

ou

$$Def_\% = \frac{(S^+ + S^-)}{(2 * N^{TdR} * \gamma^{Reference})}$$

Ainsi, c'est un cas particulier des formules précédentes en délimitant le signal tour de roue sur un nombre entier de tours de roue en choisissant les incréments de parité identique dans une même série d'incréments.

Selon un mode de réalisation spécifique, l'acquisition du premier signal est effectuée à une fréquence d'échantillonnage constante et la discrétisation spatiale d'échantillonnage du premier signal est de moins de 6 degrés, préférentiellement moins de 3 degrés, très préférentiellement moins de 1 degré.

Par exemple si on souhaite que l'évaluation de la déformation de l'enveloppe pneumatique ait lieu au niveau de l'ensemble monté, il faut que le capteur soit associé à un organe électronique comprenant un microcontrôleur, un espace mémoire, une batterie et une horloge. Alors, la discrétion spatiale envisagée avec une fréquence d'échantillonnage constante permet de réaliser des opérations élémentaires au niveau du microcontrôleur en minimisant la consommation de la batterie. De plus, la discrétisation minimale de l'ordre de 60 points au tour de roue permet de limiter le nombre d'opérations et de transfert vers l'espace mémoire. Pour autant, la précision obtenue sur la déformation de l'enveloppe pneumatique est bonne tout en ayant économisé la batterie de l'organe électronique. Cela permet de ne stocker ou de ne transférer que des valeurs scalaires intermédiaires de la méthode.

Préférentiellement, la détermination de l'accélération de référence $\gamma^{reference}$ est obtenue par la formule suivante :

$$\gamma^{reference} = \frac{\left( \sum_{Sig^{TdR}} Sig^{TdR} \right)}{N^V}$$

- Où N$^V$ est le nombre total de points discrétisés sur le signal tour de roue Sig$^{TdR}$.

Dans le cas où l'évaluation de l'accélération de référence $\gamma^{reference}$ est évaluée comme la valeur moyenne du signal tour de roue sur un nombre fini de tour de roue, c'est-à-dire que le signal tour de roue Sig$^{TdR}$ est délimité par des incréments de parités identiques et appartenant à la même série d'incréments, c'est une façon simple et rapide d'obtenir une évaluation de la grandeur scalaire.

Avantageusement, les densités d'énergie négative S$^-$ et positive S$^+$ sont définies selon les formules suivantes :

- Si le premier incrément ($I_{min}$) est un incrément correspondant à l'abscisse u du premier signal où le premier signal franchit la valeur seuil B en descente, alors:

$$S^+ = \left| \sum_{Sig^{TdR} > A}(Sig^{TdR} - \gamma^{Reference}) \right| * \frac{N'^{Pas}}{N^V} \; ;$$

et

$$S^- = \left| \sum_{Sig^{TdR} \leq A}(Sig^{TdR} - \gamma^{Reference}) \right| * \frac{N^{Pas}}{N^V} \; ;$$

- Sinon :

$$S^+ = \left| \sum_{Sig^{TdR} > A}(Sig^{TdR} - \gamma^{Reference}) \right| * \frac{N^{Pas}}{N^V} \; ;$$

et

$$S^- = \left| \sum_{Sig^{TdR} \leq A}(Sig^{TdR} - \gamma^{Reference}) \right| * \frac{N'^{Pas}}{N^V} \; ;$$

- Où $N^V$ est le nombre total de points discrétisés sur le signal tour de roue $Sig^{TdR}$.

C'est une façon simple d'obtenir une valeur scalaire de chaque densité d'énergie à partir du signal discrétisé du signal tour de roue.

Selon un mode de réalisation particulier, $N^{pas}$ et $N'^{pas}$ étant égaux entre eux et étant égaux au nombre de tour de roue $N^{TdR}$, les densités d'énergie négative $S^-$ et positive $S^+$ sont obtenues par les formules suivantes :

$$S^+ = \left| \sum_{Sig^{TdR} > A}(Sig^{TdR} - \gamma^{Reference}) \right| * \frac{N^{TdR}}{N^V} \; ;$$

et

$$S^- = \left| \sum_{Sig^{TdR} \leq A}(Sig^{TdR} - \gamma^{Reference}) \right| * \frac{N^{TdR}}{N^V} \; ;$$

Où NU est le nombre total de points discrétisés sur le signal tour de roue $Sig^{TdR}$.

Ainsi, c'est un cas particulier des formules précédentes en délimitant le signal tour de roue sur un nombre entier de tours de roue en choisissant les incréments de parité identique dans une même série d'incréments.

Selon un mode de réalisation spécifique, la méthode comprend les étapes suivantes :

Lors d'une phase préliminaire :

- Figer une première fréquence d'échantillonnage fe1 constante ;
- Délimiter une partie du premier signal par deux premiers incréments de parité identique appartenant à une même série d'incrément afin de construire un premier signal tour de roue $Sig^{TdR1}$ :
- Evaluer une première accélération de référence $\gamma^{reference1}$ selon la formule suivante :

$$\gamma^{reference1} = \frac{\left( \sum_{Sig^{TdR1}} Sig^{TdR1} \right)}{N^{U1}}$$

Où $N^{U1}$ est le nombre de points de $Sig^{TdR1}$ ;

Lors de la phase principale :

- Figer une seconde fréquence d'échantillonnage fe2 constante ;
- Délimiter une autre partie du premier signal par deux seconds incréments de parité identique appartenant à une même série d'incrément afin de construire un second signal tour de roue $Sig^{TdR2}$:
- Définir au moins une première densité d'énergie S qui est fonction du second signal tour de roue $Sig^{TdR2}$, de l'accélération de référence $\gamma^{reference1}$, nommée $S^+$ lorsque le second signal tour de roue est supérieur à un seuil A, ou nommée $S^-$ lorsque le second signal tour de roue est inférieure ou égale audit seuil A selon les formules suivantes :

$$S^+ = \left| \sum\nolimits_{Sig^{TdR2} > A} (Sig^{TdR2} - \gamma^{Reference1}) \right| * \frac{N^{TdR1}}{N^{U2}} ;$$

et

$$S^- = \left| \sum\nolimits_{Sig^{TdR2} \leq A} (Sig^{TdR2} - \gamma^{Reference1}) \right| * \frac{N^{TdR1}}{N^{U2}} ;$$

Où $N^{U2}$ est le nombre de points de $Sig^{TdR2}$ ;

- Identifier la déformation de l'enveloppe pneumatique $Def_\%$ générée par la charge Z comme une fonction de l'accélération de référence $\gamma^{reference1}$ et de la première densité d'énergie S selon l'une des formules suivantes :

$$Def_\% = \frac{N^{U1}}{N^{U2}} * \frac{\left| \sum\nolimits_{TdR2 > A} (Sig^{TdR2} - \gamma^{reference1}) \right|}{\left( \sum\nolimits_{Sig^{TdR1}} Sig^{TdR1} \right)} ,$$

ou

$$Def_\% = \frac{N^{U1}}{N^{U2}} * \frac{\left| \sum\nolimits_{Signal^{TdR2} \leq A} (Sig^{TdR2} - \gamma^{Reference1}) \right|}{\left( \sum\nolimits_{Sig^{TdR1}} Sig^{TdR1} \right)} ,$$

ou

$$Def_\% = \frac{N^{U1}}{N^{U2}} * \frac{\left| \sum\nolimits_{TdR2 > A} (Sig^{TdR2} - \gamma^{reference1}) \right| + \left| \sum\nolimits_{TdR2 \leq A} (Sig^{TdR2} - \gamma^{reference1}) \right|}{2 * \left( \sum\nolimits_{Sig^{TdR1}} Sig^{TdR1} \right)} .$$

Cette méthode se caractérise par ces deux phases distinctives. Lors de la phase préliminaire, on évalue un certain nombre de grandeurs sur une partie du premier signal. L'évaluation de ces grandeurs correspond à des opérations mathématiques élémentaires permettant d'économiser l'énergie de la batterie et l'espace mémoire du dispositif électronique embarqué dans l'enveloppe pneumatique et comprenant le capteur. En effet, la détermination de la première accélération de référence $\gamma^{reference1}$ ne fait que sommer les valeurs successives du signal issus du capteur et à compter le nombre d'incréments. Lorsqu'on a déterminé le nombre de tour de roue de ce premier signal tour de roue puisque on a découpé cette partie du premier signal entre deux incréments de parité identique et appartenant à la même série d'incréments, on divise la somme des valeurs du capteur par le nombre total d'incréments $N^{U1}$ pour obtenir $\gamma^{reference1}$. Ainsi, on minimise l'espace mémoire du dispositif électronique à seulement deux espaces, un premier espace pour la valeur de la somme à l'étape précédente et le second espace pour la nouvelle valeur du capteur. On effectue, la somme que l'on affecte au premier espace, on rentre la nouvelle valeur du capteur dans le second espace. Il faut un compteur qui compte les incréments des valeurs du capteur.

Dans la phase principale correspond à la phase commune à la méthode, on utilise les résultats issus de la phase préliminaire comme valeurs fixes. Ici, on consomme aussi, pour les valeurs des premières densités d'énergie, peu de ressources du dispositif électronique. En effet, après avoir identifié le premier incrément du second signal tour de roue, on effectue une comparaison de la valeur du capteur avec un seuil A, pour affecter le résultat de la prochaine opération à la densité d'énergie positive $S^+$ ou négative $S^-$. Ce résultat est simplement la différence entre la valeur du capteur et la première accélération de référence $\gamma^{reference1}$. En parallèle, on compte le nombre de valeurs délivrés par le capteur à l'aide d'un compteur $N^{U2}$. Pour un incrément quelconque, on somme la valeur du capteur dans un premier espace mémoire Y. On effectue également la comparaison de cette valeur avec le seuil A pour identifier l'attribution du résultat de cet incrément entre deux compteurs $S^+$ et $S^-$. On fait la différence de la valeur du capteur avec la première accélération de référence $\gamma^{reference1}$. On somme ce résultat avec le compteur $S^+$ ou $S^-$ identifié. On augmente le compteur $N^{U2}$ de valeurs délivrées par le capteur. A la fin du second signal tour de roue, on divise les compteurs $S^+$ et $S^-$ par la valeur du compteur $N^{U2}$ après avoir multiplié la valeur des compteurs par le nombre de tours de roue $N^{TDR2}$ du second signal. On divise également le contenu du premier espace mémoire Y par $N^{U2}$ pour obtenir $\gamma^{reference2}$. Le second signal tour de tour correspond aussi à un nombre entier de tours de roue puisque on a découpé cette partie du premier signal entre deux incréments de parité identique et appartenant à la même série d'incréments.

Pour la déformation de l'enveloppe pneumatique, le dispositif utilise de nouveau les résultats issus de la phase préliminaire. De plus, on utilise de même le calcul incrémental des différences entre la valeur du capteur et la première accélération de référence $\gamma^{reference1}$ que l'on classe selon les compteurs $S^+$ et $S^-$. Cette fois-ci, à la fin des incréments du second signal tour de roue, on multiplie chacun des compteurs $S^+$ et $S^-$ par le nombre total d'incréments $N^{U1}$ du premier signal tour de tour. On divise ensuite chacun des résultats par le nombre total d'incréments $N^{U2}$ du second signal. On identifie ainsi deux valeurs intermédiaires $\alpha$ et $\beta$ associées respectivement aux compteurs $S^+$ et $S^-$. Selon la formule de la déformation de l'enveloppe pneumatique que l'on souhaite employer, on divise ces valeurs intermédiaires par la première accélération de référence $\gamma^{reference1}$ évaluée lors de la phase préliminaire ou on somme ces résultats intermédiaires avant de les diviser par deux fois la première accélération de référence $\gamma^{reference1}$.

Ainsi, le résultat souhaité est obtenu en temps réel, à la fin de la phase principale. Le résultat ne nécessite que peu de ressources mémoires puisque le découpage en deux phases permet de traiter le signal au fur et à mesure sans stocker la totalité des valeurs de au moins un tour de roue. Et, les opérations effectuées sont élémentaires et sont peu consommatrices en énergie. Enfin, le résultat est précis puisque, contrairement aux méthodes de l'état de l'art qui se focalisent sur les zones du signal extrêmement réduites d'entrée et de sortie de l'aire de contact, la méthode exploite la totalité du signal. Ainsi, une petite erreur liée par exemple à la discrétisation spatiale n'impactera pas fortement le résultat contrairement aux méthodes de l'état de l'art, ce qui la rend plus robuste. Cela a pour avantage que la méthode fonctionne avec des échantillonnages spatiaux assez grossiers par rapport aux méthodes de l'état de l'art afin d'atteindre une précision d'au moins aussi bonne qualité, voire meilleure car moins sensible aux événements extérieurs ponctuels. Enfin, le calcul pouvant avoir lieu au niveau du dispositif électronique associé au capteur, seul le résultat final doit alors être transmis vers l'extérieur du dispositif électronique. Par exemple, cette transmission peut être radiofréquence. Le fait de ne transmettre qu'une grandeur scalaire est économe en énergie par comparaison avec des méthodes dont les données du capteur doivent être complètement ou partiellement transmises.

Selon un second mode de réalisation spécifique, la délimitation du premier signal sur un nombre $N^{TdR2}$ comprend les étapes suivantes :

Lors de la phase préliminaire :

- Identifier la période $T_1$ selon la formule suivante :

$$T_1 = \frac{N^{U1}}{fe1 * N^{TdR1}} \; ;$$

Lors de la phase principale ;

- Construire un second signal tour de roue $Sig^{TdR2}$ commençant par la première abscisse u du premier signal situé à $(1+M)/4$ périodes $T_1$, M étant un nombre réel positif inférieur ou égal à 2.0, préférentiellement M est la valeur unité, après la fin du premier signal tour de roue $Sig^{TdR1}$ ;

- Délimiter le second signal tour de roue $Sig^{TdR2}$ sur une durée $t_2$ correspondant à la période $T_1$ multipliée par

un nombre entier naturel N2, préférentiellement N2 est la valeur unité ;

- Le nombre de tour de roue $N^{TdR2}$ est égal à N2 ;

- Identifier une première série d'incréments K correspondant à l'abscisse u du premier signal, en commençant par l'abscisse u ayant servi à terminer le premier signal tour de roue $Sig^{TdR1}$, où le premier signal passe au-dessus ou en dessous d'une valeur seuil E', préférentiellement inférieure ou égale à la moitié de la première accélération de référence $\gamma^{reference1}$ ;

- Déterminer $N'^{U2}$ comme le nombre de points du premier signal, ramené à un tour de roue :

  - entre les incréments $K_1$ et $K_{N2+1}$ par la formule :

$$N'^{U2} = \frac{\left(U_{K_{N2+1}} - U_{K_1}\right)}{N2} * N2$$ ;

  - ou situé entre les incréments $K_1$ et $K_{N2+2}$ par la formule :

$$N'^{U2} = \frac{\left(U_{K_{N2+2}} - U_{K_1}\right)}{N2+1} * N2$$ .

Dans ce second mode de réalisation spécifique, on se sert de l'information sur le premier signal tour de roue $Sig^{TdR1}$ pour construire le second signal tour de roue $Sig^{TdR2}$. En effet, on extrait de la première phase, la période $T_1$ du premier signal tour de roue $Sig^{TdR1}$. Ensuite, on délimite sur le premier signal un second signal tour de roue $Sig^{TdR2}$ comme un multiple N2 de la période $T_1$ en prenant un premier incrément quelconque de ce premier signal situé entre le quart et les trois quarts du premier tour de roue après la fin du premier signal tour de roue $Sig^{TdR1}$. La durée de ce second signal est alors $t_2$. Ainsi, le signal de la deuxième phase est situé aussi proche que possible de la fin du premier signal tour de roue $Sig^{TdR1}$. Cela permet de minimiser la variation de vitesse de rotation W de l'enveloppe pneumatique entre les deux signaux tour de roue $Sig^{TdR1}$ et $Sig^{TdR2}$. De plus, l'ensemble des points situés entre le quart et les trois quarts du tour de roue délimité par les fronts représentatifs de l'aire de contact assure de délimiter le second signal tour de roue $Sig^{TdR2}$ dans des zones où le premier signal évolue peu. De plus, l'amplitude est proche de la valeur moyenne sur la durée du second signal tour de roue $Sig^{TdR2}$. Cela permet de minimiser les erreurs liées à la discrétisation du second signal tour de roue SigTdR2.

On fait alors l'hypothèse que le nombre de tours de roue de ce second signal tour de roue $Sig^{TdR2}$ correspond au multiple N2 employé. On construit une série d'incréments K à partir des abscisses u du premier signal dont la première abscisse correspond à l'abscisse u ayant servi à délimiter la fin du premier signal tour de roue $Sig^{TdR1}$. Ces incréments K sont identifiés quand le premier signal passe eu dessus ou en dessous d'un seuil E'. Préférentiellement ce seuil E' est inférieur à la moitié de la première accélération de référence $\gamma^{reference1}$. Enfin, on détermine une valeur $N'^{U2}$ qui correspond au nombre du premier signal situés entre deux incréments K particuliers. Cela permet de prendre en compte une éventuelle variation de la vitesse de rotation W de l'enveloppe pneumatique entre les deux phases de la méthode.

Selon un mode de réalisation particulier dépendant des deux précédents modes de réalisation spécifique, l'identification de la déformation de l'enveloppe pneumatique $Def_{\%}$ comprend les étapes suivantes :

Lors de la phase principale :

- Déterminer une deuxième accélération de référence $\gamma^{reference2}$ associée au second signal tour de roue $Sig^{TdR2}$, celle-ci est définie comme la valeur moyenne du second signal tour de roue $Sig^{TdR2}$ ramenée à un tour de roue selon la formule suivante :

$$\gamma^{reference2} = \frac{\left(\sum_{Sig^{TdR2}} Sig^{TdR2}\right)}{N^{U2}}$$ ;

- Identifier une valeur O comme étant la valeur $N^{U2}$ sauf si $N'^{U2}$ existe alors la valeur O est $N'^{U2}$ ;

- Identifier la déformation de l'enveloppe pneumatique $Def_\%$ générée par la charge selon l'une des formules suivantes :

$$Def_\% = \frac{N^{U1}}{O} * \frac{\left[ S^+ + \left( \gamma^{reference1} - \gamma^{reference2} \right) * N^{TdR2} \right]}{\left( N^{TdR2} * \gamma^{reference1} \right)},$$

ou

$$Def_\% = \frac{N^{U1}}{O} * \frac{(S^-)}{\left( N^{TdR2} * \gamma^{reference1} \right)},$$

ou

$$Def_\% = \frac{N^{U1}}{O} * \frac{\left[ S^+ + S^- + \left( \gamma^{reference1} - \gamma^{reference2} \right) * N^{TdR2} \right]}{2 * \left( N^{TdR2} * \gamma^{reference1} \right)}.$$

Ces formulations construites sur la densité d'énergie positive ou la densité d'énergie négative ou les deux permettent de corriger la déformation de l'enveloppe pneumatique en prenant en compte la variation de la vitesse de rotation W de l'enveloppe pneumatique entre les deux phases de la méthode.

De plus, les opérations sont élémentaires à la fin de la phase principale de la méthode où toutes les grandeurs intermédiaires ont été identifiées. Cependant, selon le mode de réalisation choisi pour délimiter le second signal tour de roue $Sig^{TdR2}$ à partir du premier signal, il convient de préciser une valeur O entre les valeurs $N^{U2}$ et $N'^{U2}$.

La méthode prend en compte à la fois, la modification du nombre de points entre le premier signal tour de roue et le second signal tour de roue du fait d'un changement de fréquence d'échantillonnage et d'un changement de vitesse de rotation W de l'enveloppe pneumatique.

De plus, la méthode prend aussi en compte l'erreur commise lors de la seconde phase lorsque les densités d'énergie sont évaluées par rapport à la première accélération de référence $\gamma^{reference1}$ et non pas la seconde accélération de référence $\gamma^{reference2}$.

Ainsi, cette méthode permet d'évaluer la deuxième accélération de référence $\gamma^{reference2}$ à partir du second signal tour de roue $Sig^{TdR2}$ qui a été construit. Cette évaluation ne fait que sommer les incréments de valeur du premier signal entre les deux bornes du second signal tour de roue. Lorsque la seconde borne est atteinte, il ne suffit plus qu'à diviser la somme par le nombre total d'incréments ayant servi à constituer la somme. Cette méthode est économe en espace mémoire et en ressource énergétique du dispositif électronique comprenant le capteur de la méthode.

Préférentiellement, le nombre de tour de roue $N^{TdR2}$ du deuxième signal tour de roue $Sig^{TdR2}$ est la valeur unité.

La méthode est exacte dès qu'un tour de roue a servi à évaluer les diverses grandeurs. Afin d'économiser de la ressource énergétique et de la mémoire, il est judicieux de déployer la phase principale de la méthode sur un unique tour de roue. De plus, si la vitesse de rotation W est variable, plus la phase principale sera courte, moins la variabilité de la vitesse de rotation W sera importante, plus l'évaluation de la déformation de l'enveloppe pneumatique $Def_\%$ sera précise.

Très préférentiellement, le nombre de tour de roue $N^{TdR1}$ du premier signal tour de roue $Sig^{TdR1}$ est la valeur unité.

La méthode est exacte dès qu'un tour de roue a servi à évaluer les diverses grandeurs. Bien que les calculs effectués lors de la phase préliminaire de l'analyse soient moins nombreux, dans le but d'économiser de la ressource énergétique et de la mémoire au niveau du dispositif électronique, il est judicieux de déployer la phase préliminaire de la méthode sur un unique tour de roue. De plus, si la vitesse de rotation W est variable, plus la première phase de la méthode sera courte, moins la variabilité de la vitesse de rotation W sera importante, plus l'évaluation de la déformation de l'enveloppe pneumatique $Def_\%$ sera précise.

Avantageusement, ayant effectué Ni, évaluations, préférentiellement Ni est un nombre entier compris entre 3 et 10, très préférentiellement 5, de la déformation de l'enveloppe pneumatique $Def_\%$ sur différents premiers et deuxièmes signaux tour de roue $Sig^{TdR1}$ et $Sig^{TdR2}$ sur le même premier signal, la déformation de l'enveloppe pneumatique $Def_\%$

est la moyenne des déformations de l'enveloppe pneumatique Def$_\%$ selon la formule suivante :

$$Def_\% = \frac{\sum_i Def_\%^i}{N_i}$$

Afin de rendre robuste l'évaluation de la déformation de l'enveloppe pneumatique lors du roulage à la vitesse de rotation W lorsque le premier signal est émis par le capteur, il est judicieux de faire plusieurs évaluations de la déformation de l'enveloppe pneumatique Def$_\%$. Chacune de ses évaluations peut être entachée d'une erreur en raison de facteurs extérieurs à l'ensemble monté comme par exemple des défauts sur la chaussée. Alors, effectuer la moyenne de ces divers évaluations permet de rendre robuste l'identification de la vraie déformation de l'enveloppe pneumatique Def$_\%$.

Selon un mode de réalisation privilégié, les $N_i$ évaluations sont faites successivement de sorte que la phase principale de l'évaluation Ni soit la phase préliminaire de l'évaluation $N_{i+1}$.

Et d'autant plus que si ces évaluations se succèdent les unes derrière les autres en ne prenant en compte qu'un seul tour de roue lors de chaque phase. Alors, la phase principale de l'itération précédente devient la phase préliminaire de l'itération actuelle. Ainsi, la détermination de la déformation de l'enveloppe pneumatique s'effectue sur un nombre minimum de tours de roue et l'évaluation de l'accélération de référence lors de la phase principale d'une itération sert pour l'itération suivante. Ainsi, on a une mutualisation des opérations mathématiques et logiques. Cela est peu coûteux en espace mémoire et en ressource énergétique pour une évaluation robuste.

Très avantageusement, la déformation de l'enveloppe pneumatique soumise à une charge est déterminée par la formule suivante :

$$Def_\% = \frac{\left[\sum_{Signal^{TdR} > A \ ou \ Signal^{TdR} < A}(Sig^{TdR} - \gamma^{Reference})\right]}{\left(\sum_{Sig^{TdR}} Sig^{TdR}\right)}$$

En outre, en optant pour une évaluation de l'accélération de référence $\gamma^{reference}$ sous la forme de la valeur moyenne du signal tour de roue on fait apparaitre avantageusement au numérateur et au dénominateur de la formule de calcul de Def$_\%$ une mesure réalisée par le même capteur, ce qui signifie que le résultat sera insensible à toute dérive des caractéristiques de ce capteur induite par les éléments extérieurs.

C'est la forme la plus simple et la plus élémentaire pour identifier la déformation de l'enveloppe pneumatique à partir des grandeurs discrétisés du signal tour de tour. Les deux formules sont théoriquement équivalentes aux erreurs générées par la discrétisation du signal tour de roue.

Selon un mode de réalisation préférentiel, la fonction bijective F est une fonction affine ou une fonction puissance selon les formules suivantes :

$$F(U) = A * U + B ;$$

ou

$$F(U) = X * (U)^Y ;$$

Où (A, B) ou (X, Y) sont des paramètres liés à l'ensemble monté.

Selon que l'on souhaite évaluer la charge Z appliquée à l'enveloppe pneumatique dans des conditions d'usage normal ou particulier, il convient de prendre en compte l'une ou l'autre formule pour la fonction F en prenant comme paramètre U de la fonction F, la déformation de l'enveloppe pneumatique Def$_\%$ . En effet, dans le domaine classique d'usage d'une enveloppe pneumatique en application des règles de l'ETRTO (acronyme en anglais de « European Tyres and Rim Technical Organization »), une simple fonction affine décrit correctement l'évolution de la charge Z en fonction de la déformation de l'enveloppe pneumatique Def$_\%$. De ce fait, la connaissance de l'ensemble monté et en particulier l'enveloppe pneumatique permet d'identifier de façon certaine la chargé Z appliquée à l'ensemble monté et donc à l'enveloppe pneumatique. Cependant, si on désire étendre le domaine de modélisation de la charge en fonction de la déformation de l'enveloppe pneumatique pour des usages spécifiques, comme par exemple, les très faibles ou fortes charges Z, une représentation de type puissance est mieux adaptée. Cependant, dans la zone d'usage commune, les deux fonctions donnent des résultats très proches et suffisant pour la précision recherchée, inférieure à 10 %, préférentiellement inférieure à 5%.

Selon un mode de réalisation très préférentiel, l'enveloppe pneumatique étant gonflé à une pression de gonflage P, les paramètres A ou X sont au moins dépendants de la pression de gonflage P, la détermination de la charge Z appliquée à l'ensemble monté comprend une détermination de la pression de gonflage P de l'ensemble monté.

La majorité des enveloppes pneumatiques sont montées sur roue puis gonflées à une pression de gonflage P variable selon le type d'enveloppe pneumatique. Cette pression de gonflage P influence le comportement mécanique de l'ensemble monté et en particulier celui de l'enveloppe pneumatique. Par conséquent, la déformation de l'enveloppe pneumatique est influencée par cette grandeur. Il convient alors de prendre en compte cette influence au niveau des coefficients A ou X. La détermination de la pression de gonflage P peut être faite de façon forfaitaire selon les conditions d'usage de l'ensemble monté. Il peut aussi s'agir d'une mesure directe de la pression de gonflage à l'aide d'un capteur de pression.

Très spécifiquement, les paramètres A ou X est une fonction affine de la pression de gonflage P selon la formule suivante :

$$A = a1*P + a2 \quad;$$

ou

$$X = x1*P + x2 \quad;$$

Où (a1, a2) ou (x1, x2) sont des coefficients liés à l'ensemble monté.

C'est la représentation la plus simple de la dépendance du paramètre A à la pression de gonflage P qui est réaliste en particulier dans le domaine classique d'usage d'une enveloppe pneumatique selon les règles de l'ETRTO.

Selon un autre mode de réalisation très préférentiel, l'enveloppe pneumatique étant gonflé à une pression de gonflage P, les paramètres B ou Y sont au moins dépendants de la pression de gonflage P.

La dépendance à la pression de gonflage P de ces seconds paramètres B ou Y de la fonction bijective F s'apparente à une évolution de la pente de la fonction F en fonction de la déformation de l'enveloppe pneumatique $Def_{\%}$. Cette évolution de la pente est moins flagrante que l'évolution de la rigidité de l'enveloppe pneumatique à la pression de gonflage P que décrit les premiers paramètres A ou X. Cependant, cette évolution avec la pression de gonflage P de ces seconds paramètres B ou Y renforce la précision de l'estimation de la charge Z appliquée à l'ensemble monté et donc à l'enveloppe pneumatique.

Très spécifiquement, les paramètres B ou Y est une fonction affine de la pression de gonflage P selon la formule suivante :

$$B = b1*P + b2 \quad;$$

ou

$$Y = y1*P + y2 \quad;$$

Où (b1, b2) ou (y1, y2) sont des coefficients liés à l'ensemble monté.

C'est la représentation la plus simple de la dépendance du paramètre B à la pression de gonflage P qui est réaliste en particulier dans le domaine classique d'usage d'une enveloppe pneumatique selon les règles de l'ETRTO.

Ainsi, il suffit d'identifier au plus 4 paramètres a1, a2, b1 et b2, dans le cas d'une fonction affine de la fonction F dépendant pleinement de la pression de gonflage P pour estimer la charge Z appliquée à l'enveloppe pneumatique montée sur une roue pour constituer un ensemble monté. Bien entendu, en modifiant la roue, il convient de réajuster le jeu de paramètres pour avoir une estimation, exacte. Ce jeu de paramètres peut être identifié aussi bien au travers d'une caractérisation par simulation numérique ou par des tests expérimentaux ou un mixte des deux.

**Description brève des dessins**

L'invention sera mieux comprise à la lecture de la description qui va suivre dans le cas d'une application à des bandages pneumatiques. Cette application est donnée uniquement à titre d'exemple et faite en se référant aux bs annexées dans lesquelles :

- La Fig 1 est l'exemple d'un premier signal de la méthode.

- La Fig 2 représente le signal tour de roue $Sig^{TDR}$ et son identification avec un premier mode de réalisation.

- La Fig 3 représente le signal tour de roue $Sig^{TdR}$ et son identification avec un autre mode de réalisation.

- La Fig 4 représente le signal tour de roue $Sig^{TdR}$ lors d'un roulage à vitesse de rotation W variable.

- La Fig 5 présente le premier signal tour de roue $Sig^{TdR1}$ et son identification à partir du premier signal.

- La Fig 6 représente le second signal tour de roue $Sig^{TDR2}$ et son identification avec un premier mode de réalisation.

- La Fig 7 représente le second signal tour de roue $Sig^{TdR2}$ et son identification avec un autre mode de réalisation.

- La Fig 8 représente le premier et second signal tour de roue $Sig^{TdR1}$ et $Sig^{TdR2}$ lors d'un roulage à vitesse de rotation W variable.

- La Fig 9 représente le second signal tour de roue $Sig^{TdR2}$ et l'identification des densités d'énergie $S^+$ et $S^-$ lors d'un roulage à vitesse de rotation W constante sur un tour.

- La Fig 10 est une représentation de l'estimation de la charge Z appliquée à un ensemble monté en condition de roulage.

**Description détaillée de modes de réalisation**

Pour la mise en oeuvre de l'invention, il faut équiper une enveloppe pneumatique d'un organe électronique comprenant un capteur, un microcontrôleur, une horloge, un espace mémoire et un moyen de stockage d'énergie, et des moyens de communications radiofréquences en émission et éventuellement en réception. L'enveloppe pneumatique comprend un sommet, deux flancs et deux bourrelets de révolution autour d'un axe naturel de rotation. L'enveloppe comprend aussi un plan médian équidistant des deux bourrelets, l'intersection du plan médian et de l'axe naturel de rotation définissant un centre roue.

Le capteur est fixé sur l'enveloppe pneumatique au droit du sommet, au droit d'un rib ou d'un sillon longitudinal qui sont des zones de rigidité homogène, à une position radiale R fixe par rapport à l'axe naturel de rotation de l'enveloppe pneumatique dans son état d'usage libre en rotation et non chargé. Le capteur est apte à générer au moins un signal de sortie proportionnel à l'accélération normale au sommet subie par le capteur dans l'enveloppe pneumatique. En fait, ce capteur peut être monoaxe, auquel cas, il faut le positionner de façon radiale. Il peut aussi être aussi constitué d'une pluralité de capteurs monoaxes. Dans ce cas, il convient de bien identifier l'orientation de chacun des capteurs monoaxes par rapport au repère de l'enveloppe pneumatique afin de reconstruire l'accélération normale au sommet de l'enveloppe pneumatique. Idéalement, le capteur prend en compte la composante continue et la composante alternative de l'accélération. Dans le cas où seule la composante alternative est mesurée par le capteur, il conviendra pour la mise en oeuvre de la méthode de construire artificiellement la composante continue. Pour cela, il faut alors identifier la vitesse de rotation W de l'enveloppe pneumatique en temps réel et connaitre avec précision la position radiale R du capteur. En effet, la composante continue sera évaluée comme l'accélération centrifuge du capteur par rapport à l'axe naturel de rotation de l'enveloppe pneumatique. Le capteur dans le cas de la prise en compte de la composante continue peut être un accéléromètre de technologie piezorésistive ou capacitive.

L'organe électronique, alimenté par le moyen de stockage d'énergie, est piloté par le microcontrôleur à l'aide de l'horloge et dans lequel sont aussi implantés les algorithmes de calcul qui permettent de déterminer par exemple l'état de déformation du pneumatique en utilisant les signaux issus de l'élément capteur. Les moyens de communication RF (acronyme en français de Radio Fréquences) d'émission servent à transmettre les informations calculées, et ceux de réception de recevoir des instructions de fonctionnement ou des informations utiles dans les algorithmes de calcul. Idéalement, cet organe électronique comprends ou est associé d'autres éléments de mesures (tels que pression, température, niveau d'usure, distance parcourue, etc...) afin de mutualiser les organes et optimiser les coûts de mise en oeuvre.

Ici, le capteur est mis en route par l'intermédiaire du microcontrôleur lorsque l'enveloppe pneumatique est en condition de roulage. Bien entendu, on peut sélectionner une valeur seuil de vitesse de rotation W à partir de laquelle l'acquisition d'un signal en sortie du capteur est effectuée. L'organe électronique dispose d'un espace mémoire adaptée au type d'analyse que l'on souhaite effectuer. En fait la capacité de cet espace mémoire est prédéfinie selon l'usage de l'organe électronique. C'est le microcontrôleur qui pilote le rangement des valeurs du capteur vers l'espace mémoire. De plus, le microcontrôleur est apte à effectuer des opérations mathématiques et logiques élémentaires sur un nombre de données réduites. Si, les opérations mathématiques et logiques sont plus complexes ou que le nombre de données à manipuler devient conséquent, le microcontrôleur est remplacé par un microprocesseur. Enfin l'organe électronique est alimenté en énergie par un moyen de stockage. Le plus simple comme moyen de stockage est l'utilisation d'une batterie. Cependant, une capacité de grande dimension rechargeable à l'aide d'un élément piezo électrique pourrait être envisagée

La gamme de fréquence de l'organe électronique permet de couvrir une large bande de vitesse de rotation W avec une discrétisation spatiale de moins 6 degrés. Selon un mode de réalisation particulier, la fréquence d'échantillonnage est adaptative sur commande ou en réponse à un signal comme par exemple la vitesse de rotation W de l'enveloppe pneumatique.

De façon optionnelle, l'organe électronique contient ou et apte à obtenir l'identification de l'enveloppe pneumatique ou des autres composants de l'ensemble monté. Cette information est utile pour choisir un set de données utiles pour les algorithmes de calculs au niveau de l'organe électronique comme pour l'estimation de la charge appliquée Z. Si, l'organe électronique doit obtenir l'identification des composants ou recevoir des commandes pour effectuer une mesure, l'organe électronique est équipé d'un moyen de réception radiofréquence. Celui-ci fonctionne dans la gamme des basses fréquences, idéalement à la fréquence de 125KHz afin de s'affranchir des perturbations générées par les zones métalliques de l'ensemble monté et de son environnement proche dans le véhicule.

Selon un mode de réalisation spécifique, l'organe électronique dispose de moyens d'émission radiofréquence, spécifiquement dans la bande UHF (acronyme d'Ultra Hautes fréquences), en particulier aux alentours de 433MHZ ou 900MHz ou la bande dite BLE (acronyme en anglais de Bluetooth Low Emission) qui constituent des bandes de fréquences libres. De plus, la bande des UHF permet d'avoir des tailles d'antenne réduites facilitant l'intégration de l'organe électronique au sein de l'enveloppe pneumatique.

Cette communication en émission est utile pour transmettre les données de la méthode vers le véhicule ou l'extérieur du véhicule. Il est possible soit d'émettre le train de données correspondant à l'acquisition du signal tour de roue ou de transmettre des résultats intermédiaires qui auront été calculés au niveau de l'organe électronique. Ce second mode d'émission est nécessairement moins coûteux en énergie pour l'organe électronique puisque le flux de données est moins conséquent. Or, l'émission radiofréquence est un poste consommateur en énergie par rapport à des opérations mathématiques et logiques.

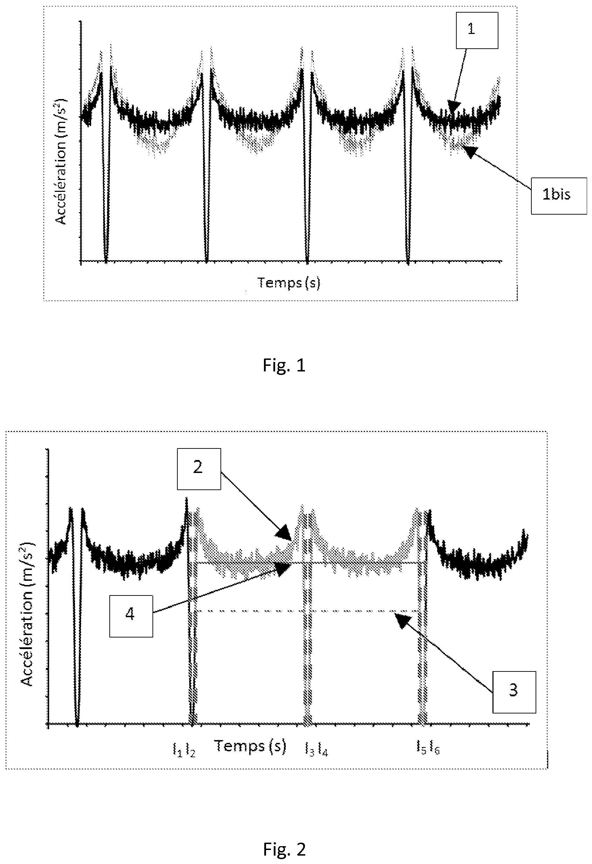

La Fig 1 présente un premier signal 1bis brut en gris correspondant à l'accélération normale au sommet d'une enveloppe pneumatique de type poids lourd roulant à une vitesse de rotation W constante. Régulièrement, de façon périodique, la courbe 1bis passe par une valeur quasi nulle. Ce phénomène périodique correspond à la traversée de l'aire de contact de l'enveloppe pneumatique par le capteur. La transition entre le passage du capteur entre l'aire de contact du pneumatique et l'autre partie de l'enveloppe pneumatique s'effectue brutalement au travers de fronts descendants ou montants selon que l'on soit à l'entrée ou la sortie de l'aire de contact. De plus, on note que le premier signal 1bis à une échelle de l'ordre du tour de roue suit une porteuse, le premier signal 1bis oscille à une fréquence plus élevée que la fréquence du tour de roue autour de cette porteuse. Ces oscillations correspondent aux bruits du premier signal 1bis du capteur dus aux divers aléas dont la macrorugosité de la route.

La courbe indexée 1 en noir, représente le même signal accélérométrique corrigé seulement de la gravité terrestre que l'on nommera premier signal corrigé 1. La correction est ici sinusoïdale en ayant phasé la correction sur un point situé au centre de l'aire de contact, c'est-à-dire à égal distance des deux fronts délimitant la partie du signal dont la valeur est quasi nulle. On observe que le premier signal 1 est plus plat entre les zones caractérisant l'aire de contact. Il est préférable d'effectuer les diverses étapes de la méthode sur ce premier signal corrigé 1.

La Fig 2 présente la méthode de détection du signal tour de roue 2 par la première méthode. A partir du premier signal 1, ici corrigé pour mieux expliciter l'exemple, on détermine un seuil B, illustré par la ligne pointillée 3. On identifie une série d'incréments I lorsque que le premier signal 1 franchit la ligne pointillée 3 ce qui correspond physiquement à une entrée ou une sortie de l'aire de contact par le capteur lié solidairement en rotation à l'enveloppe pneumatique. On délimite alors le premier signal tour de roue 2 entre un premier incrément, ici $I_1$, et un second incrément, ici $I_6$. Le signal tour de roue représente ici le signal accélérométrique du capteur sur un peu plus de deux tours de roue complets. On comptabilise trois passages dans l'aire de contact, $N^{pas}$, et deux passage en dehors de l'aire de contact, $N'^{pas}$. Par conséquent, il faudra évaluer les densités d'énergie positive $S^+$ à l'aide de $N'^{pas}$ et la densité d'énergie $S^-$ avec $N^{pas}$.

La valeur seuil B représentée par la ligne pointillée 3 a été évaluée dans notre cas sur une partie du premier signal 1 avec une fréquence d'échantillonnage variable. On extrait sur cette partie du premier signal 1, la valeur maximale discrétisée obtenue que l'on nomme MAX. La valeur seuil B est alors une valeur comprise entre 10 et 50% de la valeur MAX, dans notre cas, cette valeur est d'environ 50%.

On calcule comme la valeur moyenne du signal tour de roue 2, l'accélération de référence $\gamma^{reference}$ qui est représentée par la ligne continue 4 en noir en limitant la sommation entre des incréments de parité identiques afin d'avoir un nombre fini de tours de roue Dans notre cas,, il a été choisi de prendre les incréments I impairs entre $I_1$ et $I_5$ afin d'identifier l'accélération de référence $\gamma^{reference}$ sur la majeure partie du signal tour de roue 2. Il est tout aussi possible de calculer l'accélération de référence sur la partie du signal tour de roue délimité par les incréments $I_2$ et $I_6$ qui donnerait un résultat identique aux erreurs de discrétisation près. Son évaluation est faite en temps réel, en cumulant les valeurs des incréments u du premier signal tour de roue que l'on, divise à la fin du signal tour de roue par le nombre d'incréments du premier signal tour de roue. Bien entendu on limite le signal tour de roue à une partie du signal tour de roue entre les incréments I de parité similaire.

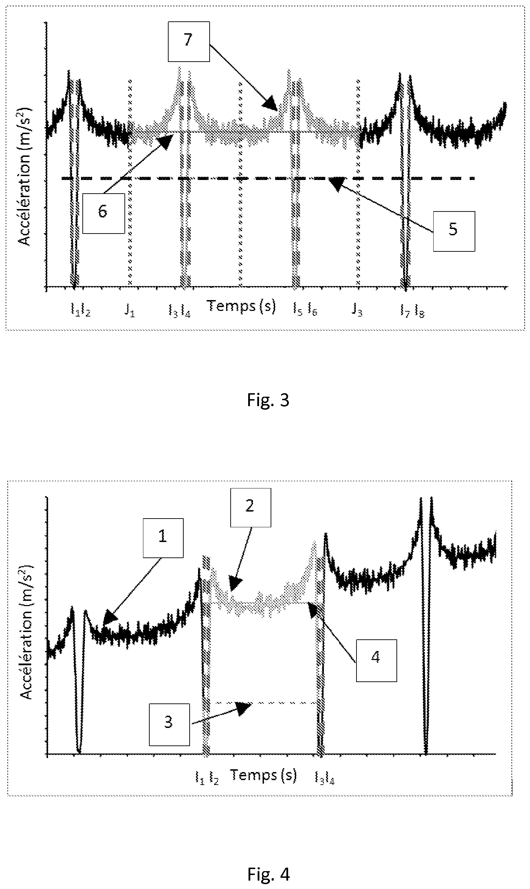

La Fig 3 est une illustration de la délimitation du signal tour de roue 7 en gris à partir du premier signal. Ici, c'est le second mode de réalisation de cette délimitation qui est employé.

A partir du premier signal, ici corrigé pour mieux expliciter l'exemple, on détermine un seuil B, illustré par la ligne pointillée 5. On identifie une série d'incréments I lorsque que le premier signal franchit la ligne pointillée 5 ce qui correspond physiquement à une entrée ou une sortie de l'aire de contact par le capteur lié solidairement en rotation à l'enveloppe pneumatique. Ensuite, en prenant dans cette illustration que les incréments I impairs, on construit une série d'incréments J situés de façon équidistante des incréments I impairs. Ces incréments sont repérés par les traits de points verticaux sur la Fig 3.

On délimite alors le signal tour de roue 7 entre un premier incrément, ici Ji, et un second incrément, ici J3. Le signal tour de roue 7 représente ici le signal accélérométrique du capteur sur deux tours de roue complets. On comptabilise deux passages dans l'aire de contact, $N^{pas}$, et deux passages en dehors de l'aire de contact, $N'^{pas}$. Par conséquent, il faudra évaluer les densités d'énergie positive $S^+$ à l'aide de $N'^{pas}$ et la densité d'énergie $S^-$ avec $N^{pas}$.

La valeur seuil B représentée par la ligne pointillée 5 a été évaluée dans notre cas sur une partie du premier signal avec une fréquence d'échantillonnage variable. On extrait sur cette partie du premier signal non corrigée de la gravité, la valeur maximale discrétisée obtenue que l'on nomme MAX. La valeur seuil B est alors une valeur comprise entre 10 et 50% de la valeur MAX, dans notre cas, cette valeur est d'environ 50%.

On calcule comme la valeur moyenne du premier signal tour de roue 7, l'accélération de référence $\gamma^{reference}$ qui est représentée par la ligne continue 6 en noir Son évaluation est faite en temps réel, en cumulant les valeurs des incréments u du signal tour de roue entre les incréments J1 et J3 que l'on, divise à la fin du signal tour de roue par le nombre d'incréments u du signal tour de roue 7

Ce second mode de réalisation est la meilleure méthode puisque les erreurs de discrétisation du signal tour de roue sur les bords n'entrainent qu'une faible variation du calcul de la densité d'énergie positive $S^+$.

La Fig 4 présente un premier signal 1, préalablement corrigé de la gravité terrestre correspondant à l'accélération normale au sommet d'une enveloppe pneumatique de type poids lourd roulant à une vitesse de rotation W variable.

Ici, on détermine un seuil B, représenté par la ligne pointillée 3 pour le signal tour de roue 2 en gris clair.

Le seuil B permet d'identifier les incréments I correspondant physiquement à l'entrée ou la sortie de l'aire de contact par le capteur. Dans cette analyse, le signal tour de roue est limité à un peu prés un seul tour de roue ce qui est préférentiel pour limiter les erreurs liées à la variation de la vitesse de rotation W de l'enveloppe pneumatique. Le seuil B a été choisi afin qu'il corresponde à moins de la moitié d'une valeur MAX d'une partie du premier signal 1 situé avant le signal tour de roue 2. Cela permet de délimiter le signal tour de roue 2 entre un premier incrément, ici $1_1$, et un second incrément, ici $I_3$. Ainsi, le signal tour de roue 2 correspond dans ce cas particulier à un nombre entier de tour de roue de l'enveloppe pneumatique.

On calcule alors, sur ce signal tour de roue 2, l'accélération de référence $\gamma^{reference}$ comme la valeur moyenne de ce signal tour de roue 2, illustré par la courbe continue 4.

On notera aussi que du fait de la vitesse de rotation W variable ici en phase d'accélération, le nombre d'incréments d'un tour de roue, délimité par des incréments I de parité identique par exemple, diminuent sensiblement tour de roue après tour de roue si on est à une fréquence d'échantillonnage constante.

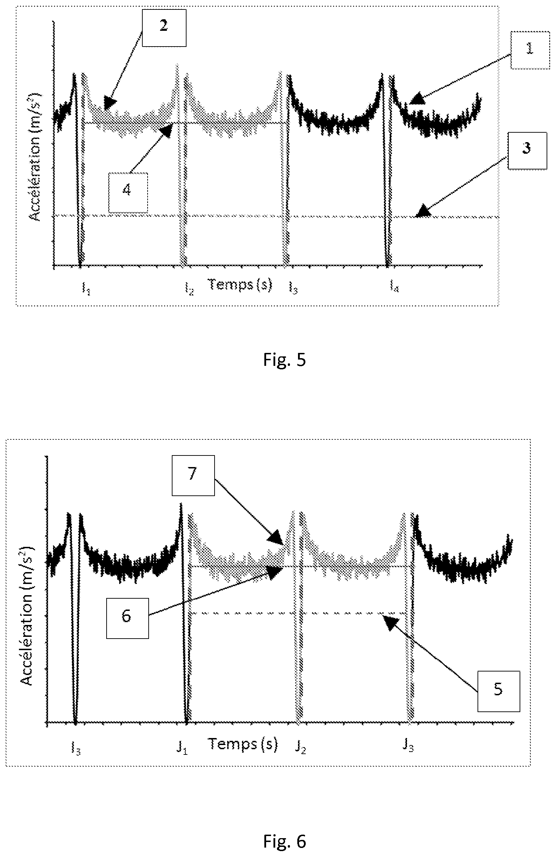

La Fig 5 présente la méthode de détection du premier signal tour de roue 2. A partir du premier signal 1, ici corrigé pour mieux expliciter l'exemple, on détermine un seuil E, illustré par la ligne pointillée 3. On identifie une série d'incréments I lorsque que le premier signal 1 franchit la ligne pointillée 3 par exemple par le dessous ce qui correspond physiquement à une sortie de l'aire de contact par le capteur lié solidairement en rotation à l'enveloppe pneumatique. On délimite alors le premier signal tour de roue 2 entre un premier incrément, ici $I_1$, et un second incrément, ici $I_3$. Le signal tour de roue représente ici le signal accélérométrique du capteur sur deux tours de roue complets.

La valeur seuil E représentée par la ligne pointillée 3 a été évaluée dans notre cas sur une partie du premier signal 1 avec une fréquence d'échantillonnage variable. On extrait sur cette partie du premier signal 1, la valeur maximale discrétisée obtenue que l'on nomme MAX. La valeur seuil E est alors une valeur comprise entre 10 et 50% de la valeur MAX, dans notre cas, cette valeur est d'environ 20%.

On calcule comme la valeur moyenne du premier signal tour de roue 2, la première accélération de référence $\gamma^{reference1}$ qui est représentée par la ligne continue 4 en noir. Son évaluation est faite en temps réel, en cumulant les valeurs des incréments u du premier signal tour de roue que l'on, divise à la fin du signal tour de roue par le nombre d'incréments du premier signal tour de roue.

La Fig 6 est une illustration de la délimitation du second signal tour de roue 7 en gris clair à partir du premier signal. Ce second signal tour de roue 7 est postérieur au premier signal tour de roue qui s'est terminé à l'incrément $I_3$. Ici, c'est le premier mode de réalisation de cette délimitation qui est employé.

A partir de la première accélération de référence $\gamma^{reference1}$ illustrée par la courbe continue 4 sur la figure précédente, on détermine une valeur seuil E' située, dans notre cas, à la moitié de la première accélération de référence $\gamma^{reference1}$. On identifie alors une série d'incréments J sur le premier signal correspondant au franchissement du premier signal par rapport à cette valeur seuil E'. Dans l'illustration, on a pris que le franchissement par le dessous de ce seuil E' pour identifier les incréments J. On aurait pu prendre les incréments correspondant au franchissement par le dessus du seuil E'. Ce seuil E' est illustré par la ligne pointillée 5. On délimite alors le second signal tour de roue 7 en gris à l'aide d'un premier incrément, ici Ji, et d'un second incrément, ici $J_3$. Ce second signal tour de roue 7 correspond à un nombre fini de tours de roue, ici 2, aux erreurs de discrétisation prés.

On calcul la seconde accélération de référence $\gamma^{reference2}$ illustrée par la ligne continue 6 comme la valeur moyenne du second signal tour de roue 7, de la même manière que précédemment pour $\gamma^{reference1}$. Cela permet d'effectuer le calcul en temps réel au niveau de l'organe électronique comprenant le capteur en minimisant les ressources mémoires et énergétiques de l'organe électronique.

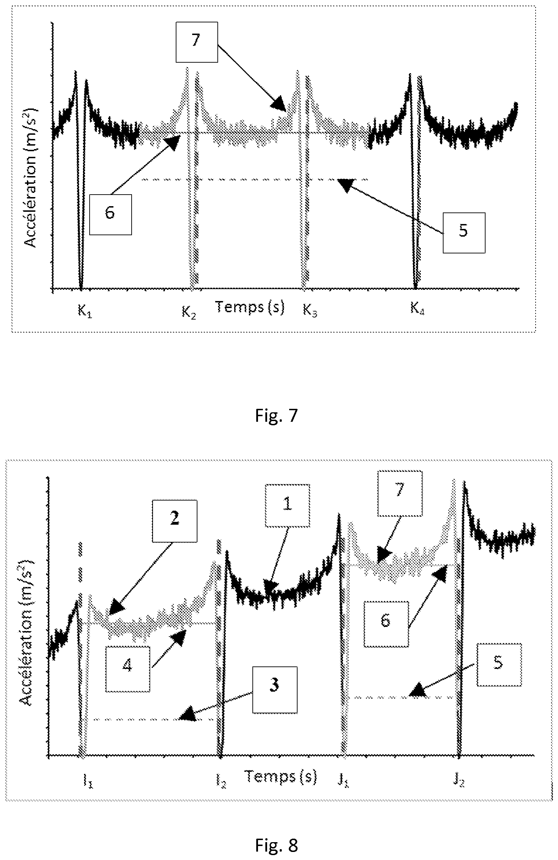

La Fig 7 est une illustration de la délimitation du second signal tour de roue 7 en gris à partir du premier signal. Ce second signal tour de roue 7 est postérieur au premier signal tour de roue qui s'est terminé à l'incrément $I_3$.qui est ici l'incrément $K_1$. Ici, c'est le second mode de réalisation de cette délimitation qui est employé.

A partir du premier signal tour de roue, il est possible de calculer la période T du premier signal ramené à un tour de roue. Ensuite, on identifie le premier incrément u du premier signal qui se situe entre le quart et les trois quarts de la période T située après la fin du premier signal tour de roue délimité par l'incrément K1. Dans l'illustration de la Fig 7, on a choisi arbitrairement que le second signal tour de roue commence peu après la moitié de la période. Cela correspond physiquement à l'instant où le capteur se situe à l'opposé de l'aire de contact définie par l'enveloppe pneumatique lors de sa rotation solidaire avec l'enveloppe pneumatique.

On construit alors un second signal tour de roue 7 en gris sur une durée t correspondant à un multiple entier de la période T. Le premier incrément u du premier signal situé après la durée t de ce second signal tour de roue 7 ne sera pas pris dans le second signal tour de roue 7.

A partir de ce second signal tour de roue 7, on détermine une seconde accélération de référence $\gamma^{reference2}$ comme la valeur moyenne de ce second signal tour de roue, représentée par la ligne continue 6.

Par ailleurs, on définit à partir du dernier incrément u ayant servi à délimiter le premier signal tour de roue, une série d'incrément K. Le premier incrément $K_1$ correspond au dernier incrément u ayant servi à délimiter la fin du premier signal tour de roue. Les autres incréments K sont calculées à l'aide d'un seuil E' représentée par la ligne pointillée 5 qui sera inférieure ou égale à la moitié de la première accélération de référence $\gamma^{reference1}$ défini sur le premier signal tour de roue. Ces incréments permettent d'identifier le nombre d'incrément $N'^{U2}$.

La Fig 8 présente un premier signal 1, préalablement corrigé de la gravité terrestre correspondant à l'accélération normale au sommet d'une enveloppe pneumatique de type poids lourd roulant à une vitesse de rotation W variable.

Ici, on détermine des seuils E et E', représentées par les lignes pointillées 3 et 5, respectivement pour le premier signal tour de roue 2 en gris et le second signal tour de roue 7 en gris clair.

Le premier seuil E permet d'identifier les incréments I correspondant par exemple à la sortie de l'aire de contact par le capteur. Dans cette analyse, le premier signal tour de roue est limité à un tour de roue ce qui est préférentiel pour limiter les erreurs liées à la variation de la vitesse de rotation W de l'enveloppe pneumatique. Le seuil E a été choisi afin qu'il corresponde à la moitié de l'accélération de référence du premier signal délimité sur un nombre entier de tour de roue effectuée avant le premier signal tour de roue 3. On calcule aussi, sur ce premier signal tour de roue 3, la première accélération de référence $\gamma^{reference1}$ comme la valeur moyenne de ce premier signal tour de roue, illustré par la courbe continue 4.

Le seuil E' pour délimiter le second signal tour de roue 7 correspond ici à la moitié de la première accélération de référence $\gamma^{reference1}$ du premier signal tour de roue. On délimite le second signal tour de roue, à l'aide de ces fronts sur un unique tour de roue. On évalue sur ce second signal tour de roue 7, la seconde accélération de référence $\gamma^{reference2}$ comme la valeur moyenne de ce second signal tour de roue 7, représentée par la courbe continue 6.

On notera aussi que du fait de la vitesse de rotation W variable ici en phase d'accélération, le nombre d'incréments $N^{U1}$ et $N^{U2}$ entre le premier et le second signal tour de roue 3 et 7 diminuent sensiblement.

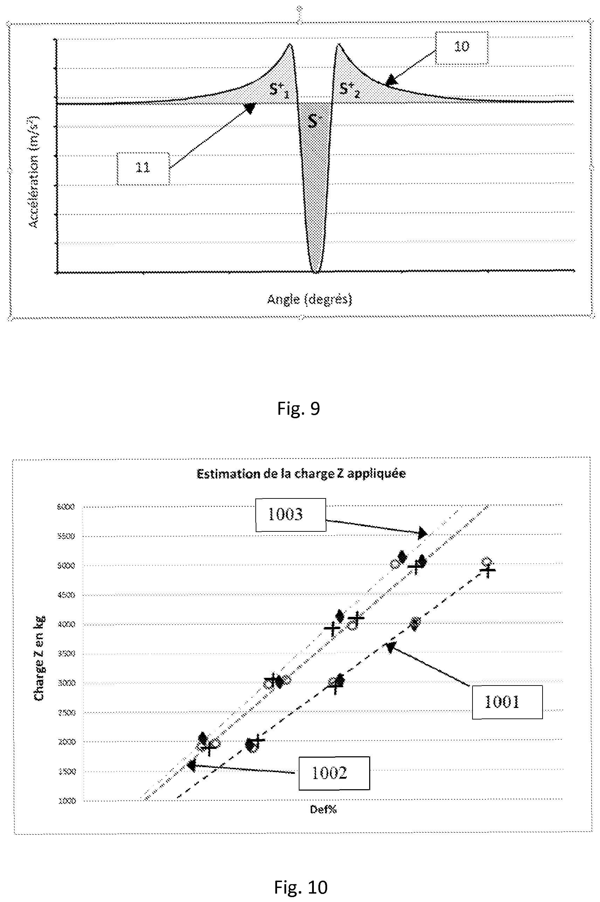

La Fig 9 est une illustration pour expliciter le calcul des densités d'énergie positive $S^+$ et négative $S^-$ sur un second signal tour de roue 10 correspond à un seul tour de roue lorsque la vitesse de rotation W est constante. Bien entendu, la méthode est identique si la vitesse de rotation W est variable ou que le signal tour de roue est délimité sur plusieurs tour de roue.

On détermine le seuil A comme étant ici le produit d'une valeur C, ici égale à 1,0, par l'accélération de référence $\gamma^{reference}$ identifié sur une partie du signal tour de roue. Ce seuil est matérialisé par la ligne continue 11. En fait, il est préférable sur des signaux réels de prendre une valeur de C égal à 0,7. Si les signaux sont fortement perturbés, oscillations sensibles autour du signal tour de roue 10 à une fréquence plus élevée que le tour de roue, on peut choisir une valeur de C égal à 0,5 ou 0,6. En revanche, pour des signaux obtenus sur des chaussées globalement lisses, une valeur de C de l'ordre de 0,8 ou 0,9 peut être employée. Il faut que cette valeur C soit figée pour toutes les étapes de la méthode.

On calcule les densités d'énergie positive $S^+$ ou négative $S^-$ comme la sommation des valeurs absolues des différences entre le second signal tour de roue 10 et l'accélération de référence $\gamma^{reference}$, dans ce cas précis représentée par la courbe continue 11. Nécessairement, la surface délimitée par les surfaces $S^+$ est égale à la surface délimitée par la surface $S^-$ aux erreurs de discrétisation prés.

La Fig 10 est une illustration de l'estimation de la charge Z appliquée sur un ensemble monté en condition de roulage à vitesse de rotation W constante et variable.

Ici, deux enveloppes différentes ont été employées. La première E1 est une enveloppe pneumatique poids lourd 385/55R22.5 monté sur une roue tôle de 22.5 pouces de la marque Michelin de la gamme X Mutiway T à un niveau d'usure D1. La seconde enveloppe pneumatique E2 est de dimension 315/80R22.5 de la marque Michelin de la gamme X Multiway 3D XDE à un niveau d'usure D2. Chaque enveloppe est équipée d'un dispositif électronique embarqué comprenant un accéléromètre tridimensionnel positionné au droit du sommet au niveau d'un élément de sculpture en saillie, c'est à-dire différent d'un sillon longitudinal. La fréquence d'acquisition de l'accéléromètre est de 1200Hz. On repère l'accéléromètre tridimensionnel par rapport au repère de l'enveloppe pneumatique pour récupérer l'accélération normale au sommet.

Chaque enveloppe pneumatique subit une série de roulages dans lequel on fait varier la vitesse de déplacement autour de 20, 40 et 60 km/h à une pression de gonflage P variant de 7 à 9 bars par pas de 1 bar. La pression est mesurée lors du roulage par l'intermédiaire d'un capteur de pression ici intégré dans un TPMS monté à la valve de roue. Enfin, la charge Z appliquée à l'ensemble monté varie entre 2000 et 5000 kg par pas de 1 tonne.

Au préalable, à l'aide de la simulation numérique, les quatre coefficients des fonctions affines de la fonction bijective F de chaque enveloppe pneumatique ont été déterminés. En effet, on se trouve exactement dans la zone d'usage préconisée par les règles de l'ETRTO, la représentation affine de la fonction F doit être privilégiée.

La moitié des roulages ont été effectuée à vitesse de rotation constante tandis que l'autre a été effectuée à vitesse de rotation variable autour de la vitesse cible à +/-15%. En fonction de la nature de la vitesse de rotation, l'une ou l'autre des formules de calcul de la déformation de l'enveloppe pneumatique a été employé.

La Fig 10 présente des droites continues correspondant à la réponse délivrée par les coefficients de la fonction bijective F qui dépendent ici de la pression de gonflage P et de l'ensemble monté dont l'enveloppe pneumatique. On note aussi des symboles de forme différentes selon la vitesse de roulage cible, des losanges pour les vitesses à 20 km/h, des ronds pour les vitesses à 40 km/h et des croix pour les vitesses à 60 km/h

La courbe 1001 correspond à l'ensemble monté comprenant l'enveloppe pneumatique E1 à une pression de gonflage de 7 bars. La courbe 1002 correspond à l'ensemble monté comprenant l'enveloppe pneumatique E2 à la pression de gonflage de 8 bars. Enfin la courbe 1003 correspond à l'ensemble monté dont l'enveloppe pneumatique est E1 à la pression de gonflage de 9 bars.

On note une assez bonne corrélation entre l'estimation de la charge Z avec la vraie charge appliquée et ce quelle que soit la vitesse de déplacement, que celle-ci soit constante ou variable. De plus, selon la nature de l'enveloppe pneumatique, la représentation affine de la charge est réaliste par rapport aux essais dans cette gamme de conditions d'usage de l'ensemble monté.

De résultats tout aussi bons sont obtenus quelle que soit la nature de l'enveloppe pneumatique, de la charge appliquée, de la pression de gonflage employée et de l'usure du pneumatique.

**Revendications**

1.  Méthode d'obtention d'une charge appliquée à une enveloppe pneumatique en condition de roulage, dans un état montée sur roue afin de constituer un ensemble monté, la dite enveloppe pneumatique ayant un sommet, deux flancs et deux bourrelets de révolution autour d'un axe naturel de rotation et un plan médian, l'intersection du plan médian et de l'axe naturel de rotation définissant un centre roue, comportant les étapes suivantes :

    - Fixer au moins un capteur sur l'enveloppe pneumatique au droit du sommet ayant une position radiale R par rapport à l'axe naturel de rotation dans son état monté, apte à générer au moins un signal de sortie proportionnel à l'accélération subie par ledit capteur dans l'enveloppe pneumatique ;

- Mettre l'ensemble monté en condition de roulage à une vitesse de rotation W, soumise à une charge Z;
- Réaliser l'acquisition d'au moins un premier signal (1, 1bis) d'abscisse u comprenant au moins l'amplitude de l'accélération selon la direction normale au sommet lors d'un roulage à la vitesse de rotation W ;
- Déterminer une accélération de référence $\gamma^{reference}$ (4, 6) fonction de la vitesse de rotation W et de la position du au moins un capteur ;
- Identifier une première série d'incréments I, correspondant à l'abscisse u du au moins un premier signal où le premier signal franchit une valeur seuil B (3, 5).
- Délimiter le premier signal (1, 1bis) entre un premier incrément $I_{min}$ et un second incrément $I_{max}$ afin de construire un signal tour de roue $Sig^{TdR}$ (2, 7, 10) ;
- Définir au moins une première densité d'énergie S qui est fonction du signal tour de roue $Sig^{TdR}$ (2, 7, 10), de l'accélération de référence $\gamma^{reference}$(4, 6), nommée $S^+$ lorsque le signal tour de roue est supérieur à un seuil A (11), ou nommée $S^-$ lorsque le signal tour de roue (2, 7, 10) est inférieure ou égale audit seuil A (11) ;
- Identifier la déformation subie de l'enveloppe pneumatique $Def_\%$ comme une fonction de l'accélération de référence $\gamma^{reference}$ (4, 6) et de la première densité d'énergie S ;
- Déterminer la charge Z appliquée à l'ensemble monté à l'aide d'une fonction bijective F (1001, 1002, 1003) comprenant au moins comme paramètre la déformation de l'enveloppe pneumatique $Def_\%$.

2. Méthode d'obtention d'une charge appliquée à une enveloppe pneumatique selon la revendications 1 dans laquelle, l'acquisition du premier signal (1, 1bis) est effectuée pour une vitesse de rotation W supérieure ou égale à une vitesse de rotation seuil $W_{seuil}$ définie par la formule suivante :

$$W_{seuil} = \frac{12}{\sqrt{Dev}}$$

;

Où Dev est le développement de l'enveloppe pneumatique.

3. Méthode d'obtention d'une charge appliquée à une enveloppe pneumatique selon l'une quelconques des revendications 1 à 2 dans laquelle on identifie la première série d'incréments I par la combinaison des étapes suivantes :

- Définir une valeur seuil B (3, 5) qui est fonction du au moins un maximum d'au moins une partie du premier signal (1, 1bis), préférentiellement une valeur compris entre 0,1 et 0,5 du au moins un maximum d'au moins une partie du premier signal (1, 1bis) ;
- Déterminer un second signal d'abscisse u comme une fonction de la au moins une partie du premier signal (1, 1bis) et de la valeur seuil B (3, 5);
- Identifier la première série des incréments I, correspondant à l'abscisse u du au moins une partie du premier signal (1, 1bis) et du second signal où le second signal franchit un seuil E, préférentiellement, le second signal étant obtenu par la différence entre le premier signal (1, 1bis) et la valeur seuil B (3, 5), le seuil E est la valeur nulle, ou, le second signal étant obtenu par le rapport entre le premier signal (1, 1bis) et la valeur seuil B (3, 5), le seuil E est la valeur unité.

4. Méthode d'obtention d'une charge appliquée à une enveloppe pneumatique selon l'une quelconque des revendications 1 à 3 dans laquelle, l'identification des incréments comprend les étapes suivantes ;

- Créer une seconde série d'incréments J correspondant à l'abscisse u intermédiaire, préférentiellement située entre un huitième et sept huitième, très préférentiellement située à la longueur médiane, de la longueur définie par les abscisses u des incréments I de parités identiques et consécutifs, et
- Construire le signal tour de roue $Sig^{TdR}$ (7) entre un premier incrément $J_{min}$ et un second incrément $J_{max}$.

5. Méthode d'obtention d'une charge appliquée à une enveloppe pneumatique selon l'une des revendications précédentes dans laquelle le seuil A (11) est fonction de l'accélération de référence $\gamma^{reference}$(4, 6), préférentiellement, le seuil A (11) est aussi fonction d'un facteur C supérieur ou égal à 0.5 et inférieur ou égal à 0.9 selon la formule suivante :

$$A = C * \gamma^{Reference}$$

6. Méthode d'obtention d'une charge appliquée à une enveloppe pneumatique selon l'une des revendications 1 à 5 dans laquelle l'accélération de référence $\gamma^{reference}$(4, 6), fonction de la position radiale R du au moins un capteur, est définie par la formule suivante :

$$\gamma^{reference} = R * W^2$$

**7.** Méthode d'obtention d'une charge appliquée à une enveloppe pneumatique selon l'une des revendications 1 à 5 dans laquelle la détermination de l'accélération de référence $\gamma^{reference}$ (4, 6) est définie comme la valeur moyenne de au moins une partie du premier signal (1, 1bis) compris entre deux incréments de parité identique appartenant à la même série d'incrément.

**8.** Méthode d'obtention d'une charge appliquée à une enveloppe pneumatique selon l'une des revendications précédentes dans laquelle, ayant phasé le signal tour de roue $Sig^{TdR}$ (2, 7, 10) par rapport à une position angulaire de l'enveloppe pneumatique, une correction Corr est apportée au signal tour de roue $Sig^{TdR}$ (2, 7, 10) pour prendre en compte l'effet de la gravité terrestre.

**9.** Méthode d'obtention d'une charge appliquée à une enveloppe pneumatique selon l'une quelconque des revendications 1 à 8, la méthode comprenant les étapes suivantes :

- Déterminer un premier nombre de passage $N^{Pas}$ du signal tour de roue $Sig^{TdR}$ (2, 7, 10) comme la partie entière par excès de la moitié de la différence entre le second incrément ($J_{max}$, $I_{max}$) et le premier incrément ($I_{min}$, $J_{min}$) du signal tour de roue $Sig^{TdR}$(2, 7, 10) ;
- Déterminer un second nombre de passage $N'^{Pas}$ du signal tour de roue $Sig^{TdR}$ (2, 7, 10) comme la partie entière de la moitié de la différence entre le second incrément ($J_{max}$, $I_{max}$) et le premier incrément ($I_{min}$, $J_{min}$) du signal tour de roue $Sig^{TdR}$(2, 7, 10) ;

Si le premier incrément ($I_{min}$) est un incrément correspondant à l'abscisse u du premier signal où le premier signal (1, 1bis) franchit la valeur seuil B (3, 5) en descente, alors la méthode comprend l'étape suivante :

- Identifier la déformation de l'enveloppe pneumatique $Def_{\%}$ soumise à une charge par les formules suivantes :

$$Def_{\%} = \frac{(S^-)}{(N^{Pas} * \gamma^{Reference})} = \frac{(S^+)}{(N'^{Pas} * \gamma^{Reference})} = \frac{1}{2} * \left[ \left( \frac{(S^+)}{(N'^{Pas} * \gamma^{Reference})} \right) + \left( \frac{(S^-)}{(N^{Pas} * \gamma^{Reference})} \right) \right]$$

Sinon, la méthode comprend l'étape suivante :

- Identifier la déformation de l'enveloppe pneumatique $Def_{\%}$ soumise à une charge par les formules suivantes :

$$Def_{\%} = \frac{(S^+)}{(N^{Pas} * \gamma^{Reference})} = \frac{(S^-)}{(N'^{Pas} * \gamma^{Reference})} = \frac{1}{2} * \left[ \left( \frac{(S^+)}{(N^{Pas} * \gamma^{Reference})} \right) + \left( \frac{(S^-)}{(N'^{Pas} * \gamma^{Reference})} \right) \right]$$

**10.** Méthode d'obtention d'une charge appliquée à une enveloppe pneumatique selon la revendication 9 dans laquelle, $N^{pas}$ et $N'^{pas}$ étant égaux entre eux et étant égaux au nombre de tour de roue $N^{TdR}$, la déformation de l'enveloppe pneumatique $Def_{\%}$ soumise à une charge est déterminée par l'une des formules suivantes :

$$Def_{\%} = \frac{(S)}{(N^{TdR} * \gamma^{Reference})}$$

,

ou

$$Def_\% = \frac{(S^+ + S^-)}{(2 * N^{TdR} * \gamma^{Reference})}$$

**11.** Méthode d'obtention d'une charge appliquée à une enveloppe pneumatique selon l'une quelconque des revendications précédentes dans laquelle l'acquisition du premier signal (1, 1bis) est effectuée à une fréquence d'échantillonnage constante et la discrétisation spatiale d'échantillonnage du premier signal (1, 1bis) est de moins de 6 degrés, préférentiellement moins de 3 degrés, très préférentiellement moins de 1 degrés

**12.** Méthode d'obtention d'une charge appliquée à une enveloppe pneumatique selon la revendication 11 prise en combinaison avec la revendication 7 dans laquelle la détermination de l'accélération de référence $\gamma^{reference}$ (4, 6) est obtenue par la formule suivante :

$$\gamma^{reference} = \frac{\left(\sum_{Sig^{TdR}} Sig^{TdR}\right)}{N^V}$$

Où $N^V$ est le nombre total de points discrétisés sur le signal tour de roue $Sig^{TdR}$(2, 7, 10).

**13.** Méthode d'obtention d'une charge appliquée à une enveloppe pneumatique selon la revendication 11 prise en combinaison avec la revendication 9 dans laquelle les densités d'énergie négative $S^-$ et positive $S^+$ sont définies selon les formules suivantes :

- Si le premier incrément ($I_{min}$) est un incrément correspondant à l'abscisse u du premier signal où le premier signal (1, 1bis) franchit la valeur seuil B (3, 5) en descente, alors:

$$S^+ = \left|\sum_{Sig^{TdR}>A}(Sig^{TdR} - \gamma^{Reference})\right| * \frac{N'^{Pas}}{N^V} \;;$$

et

$$S^- = \left|\sum_{Sig^{TdR}\leq A}(Sig^{TdR} - \gamma^{Reference})\right| * \frac{N^{Pas}}{N^V} \;;$$

- Sinon :

$$S^+ = \left|\sum_{Sig^{TdR}>A}(Sig^{TdR} - \gamma^{Reference})\right| * \frac{N^{Pas}}{N^V} \;;$$

et

$$S^- = \left|\sum_{Sig^{TdR}\leq A}(Sig^{TdR} - \gamma^{Reference})\right| * \frac{N'^{Pas}}{N^V} \;;$$

Où $N^V$ est le nombre total de points discrétisés sur le signal tour de roue $Sig^{TdR}$.

**14.** Méthode d'obtention d'une charge appliquée à une enveloppe pneumatique selon la revendication précédente dans laquelle, $N^{pas}$ et $N'^{pas}$ étant égaux entre eux et étant égaux au nombre de tour de roue $N^{TdR}$, les densités d'énergie négative $S^-$ et positive $S^+$ sont obtenues par les formules suivantes :

$$S^+ = \left| \sum_{Sig^{TdR}>A}(Sig^{TdR} - \gamma^{Reference}) \right| * \frac{N^{TdR}}{N^U} \; ;$$

et

$$S^- = \left| \sum_{Sig^{TdR}\leq A}(Sig^{TdR} - \gamma^{Reference}) \right| * \frac{N^{TdR}}{N^U} \; ;$$

Où $N^U$ est le nombre total de points discrétisés sur le signal tour de roue $Sig^{TdR}$

**15.** Méthode d'obtention d'une charge appliquée à une enveloppe pneumatique selon la revendication 11 prise en combinaison avec la revendication 7 dans laquelle :

Lors d'une phase préliminaire comprenant les étapes suivantes :

- Figer une première fréquence d'échantillonnage fe1 constante ;
- Délimiter une partie du premier signal (1, 1bis) par deux incréments de parité identique appartenant à une même série d'incrément afin de construire un premier signal tour de roue $Sig^{TdR1}$(2):(
- Evaluer une première accélération de référence $\gamma^{reference1}$(4, 6) selon la formule suivante

$$\gamma^{reference1} = \frac{\left( \sum_{Sig^{TdR1}} Sig^{TdR1} \right)}{N^{U1}}$$

Où $N^{U1}$ est le nombre de points de $Sig^{TdR1}$

Lors de la phase principale :

- Figer une seconde fréquence d'échantillonnage fe2 constante ;
- Délimiter une autre partie du premier signal (1, 1bis) par deux incréments de parité identique appartenant à une même série d'incrément afin de construire un second signal tour de roue $Sig^{TdR2}$(7, 10):
- Définir au moins une première densité d'énergie S qui est fonction du second signal tour de roue $Sig^{TdR2}$(7, 10), de l'accélération de référence $\gamma^{reference1}$(4, 6), nommée $S^+$ lorsque le signal tour de roue (7, 10) est supérieur à un seuil A (11), ou nommée $S^-$ lorsque le signal tour de roue (7, 10) est inférieure ou égale audit seuil A(11) selon les formules suivantes :

$$S^+ = \left| \sum_{Sig^{TdR2}>A}(Sig^{TdR2} - \gamma^{Reference1}) \right| * \frac{N^{TdR2}}{N^{U2}} \; ;$$

et

$$S^- = \left| \sum_{Sig^{TdR2}\leq A}(Sig^{TdR2} - \gamma^{Reference1}) \right| * \frac{N^{TdR2}}{N^{U2}} \; ;$$

Où $N^{U2}$ est le nombre de points de $Sig^{TdR2}$ ;
- Identifier la déformation de l'enveloppe pneumatique $Def_\%$ générée par la charge Z comme une fonction de l'accélération de référence $\gamma^{reference1}$ (4, 6) et de la première densité d'énergie S selon l'une des formules suivantes :

$$Def_{\%} = \frac{N^{U1}}{N^{U2}} * \frac{\left|\sum_{Sig^{TdR2}>A_o}\left(Sig^{TdR2}-\gamma^{Reference1}\right)\right|}{\left(\sum_{Sig^{TdR1}}Sig^{TdR1}\right)} ,$$

ou

$$Def_{\%} = \frac{N^{U1}}{N^{U2}} * \frac{\left|\sum_{signal^{TdR2}\leq A}\left(Sig^{TdR2}-\gamma^{Reference1}\right)\right|}{\left(\sum_{Sig^{TdR1}}Sig^{TdR1}\right)} ,$$

ou

$$Def_{\%} = \frac{N^{U1}}{N^{U2}} * \frac{\left|\sum_{Sig^{TdR2}>A}\left(Sig^{TdR2}-\gamma^{Reference1}\right)\right| + \left|\sum_{Sig^{TdR2}\leq A}\left(Sig^{TdR2}-\gamma^{Reference1}\right)\right|}{2*\left(\sum_{Sig^{TdR1}}Sig^{TdR1}\right)}$$

**16.** Méthode d'obtention d'une charge appliquée à une enveloppe pneumatique selon la revendication précédente dans laquelle la délimitation du premier signal (1, 1bis) sur un nombre $N^{TdR2}$ comprend les étapes suivantes :

Lors de la phase préliminaire :

- Identifier la période T1 selon la formule suivante :

$$T_1 = \frac{N^{U1}}{fe1 * N^{TdR1}}$$

Lors de la phase principale ;

- Construire un second signal tour de roue $Sig^{TdR2}$ (7, 10) commençant par la première abscisse u du premier signal (1, 1bis) situé à (1+M)/4 périodes T1, M étant un nombre réel positif inférieur ou égal à 2.0, préférentiellement M est la valeur unité, après la fin du premier signal tour de roue $Sig^{TdR1}$ (2);
- Délimiter le second signal tour de roue $Sig^{TdR2}$ (7, 10) sur une durée t2 correspondant à la période T1 multipliée par un nombre entier naturel N2, préférentiellement N2 est la valeur unité ;
- Le nombre de tour de roue $N^{TdR2}$ est égal à N2 ;
- Identifier une première série d'incréments K correspondant à l'abscisse u du premier signal(1, 1bis) , en commençant par l'abscisse u ayant servi à terminer le premier signal tour de roue $Sig^{TdR1}$(2), où le premier signal (1, 1bis) passe au-dessus ou en dessous d'une valeur seuil E', préférentiellement inférieure ou égale à la moitié de la première accélération de référence $\gamma^{reference1}$ (4, 6);
- Déterminer $N'^{U2}$ comme le nombre de points du premier signal (1, 1bis) :
- situés entre les incréments $K_1$ et $K_{N2+1}$ par la formule :

$$N'^{U2} = \frac{\left(U_{K_{N2+1}}-U_{K_1}\right)}{N2} * N2 ;$$

- où situés entre les incréments $K_1$ et $K_{N2+2}$ par la formule :

$$N'^{U2} = \frac{\left(U_{K_{N2+2}}-U_{K_1}\right)}{N2+1} * N2 .$$

**17.** Méthode d'obtention d'une charge appliquée à une enveloppe pneumatique selon l'une des revendications 15 à 16 dans laquelle l'identification de la déformation de l'enveloppe pneumatique $Def_\%$ comprend les étapes suivantes : Lors de la phase principale :

- Déterminer une deuxième accélération de référence $\gamma^{reference2}$ (4, 6) associée au deuxième signal tour de roue $Sig^{TdR2}$(7, 10):, celle-ci étant définie comme la valeur moyenne du deuxième signal tour de roue $Sig^{TdR2}$ (7, 10):ramené à un tour de roue selon la formule suivante :

$$\gamma^{reference2} = \frac{\left(\sum_{Sig^{TdR2}} Sig^{TdR2}\right)}{N^{U2}} \ ;$$

- Identifier une valeur O comme étant la valeur $N^{U2}$ sauf si $N'^{U2}$ existe alors la valeur O est $N'^{U2}$ ;
- Identifier la déformation de l'enveloppe pneumatique $Def_\%$ générée par la charge selon l'une des formules suivantes :

$$Def_\% = \frac{N^{U1}}{O} * \frac{\left[S^+ + \left(\gamma^{reference1} - \gamma^{refernce2}\right) * N^{TdR2}\right]}{\left(N^{TdR2} * \gamma^{reference1}\right)} \ ,$$

ou

$$Def_\% = \frac{N^{U1}}{O} * \frac{(S^-)}{\left(N^{TdR2} * \gamma^{reference1}\right)} \ ,$$

ou

$$Def_\% = \frac{N^{U1}}{O} * \frac{\left[S^+ + S^- + \left(\gamma^{reference1} - \gamma^{reference2}\right) * N^{TdR2}\right]}{2 * \left(N^{TdR2} * \gamma^{reference1}\right)} \ .$$

**18.** Méthode d'obtention d'une charge appliquée à une enveloppe pneumatique selon l'une des revendications 1 à 17 dans laquelle, la fonction bijective F (1001, 1002, 1003) est une fonction affine ou une fonction puissance selon les formules suivantes :

$$F(U) = A * U + B \ ;$$

ou

$$F(U) = X * (U)^Y \ ;$$

Où (A, B) ou (X, Y) sont des paramètres liés à l'ensemble monté.

**19.** Méthode d'obtention d'une charge appliquée à une enveloppe pneumatique selon la revendication précédente dans laquelle, l'ensemble monté étant gonflé à la pression de gonflage P, les paramètres A ou X sont au moins dépendants de la pression de gonflage P, la détermination de la charge Z appliquée à l'ensemble monté comprend une détermination de la pression de gonflage P de l'ensemble monté.

**20.** Méthode d'obtention d'une charge appliquée à une enveloppe pneumatique selon la revendication précédente dans laquelle, les paramètres A ou X sont une fonction affine de la pression de gonflage P selon la formule suivante :

$$A = a1*P+a2 \quad ;$$

ou

$$X = x1*P+x2 \quad ;$$

Où (aI, a2) ou (x1, x2) sont des coefficients liés à l'ensemble monté.

21. Méthode d'obtention d'une charge appliquée à une enveloppe pneumatique selon l'une des revendications 19 à 20 dans laquelle, les paramètres B ou Y sont au moins dépendants de la pression de gonflage P.

22. Méthode d'obtention d'une charge appliquée à une enveloppe pneumatique selon la revendication précédente dans laquelle, les paramètres B ou Y sont une fonction affine de la pression de gonflage P selon la formule suivante :

$$B = b1*P+b2 \quad ;$$

ou

$$Y = y1*P+y2 \quad ;$$

Où (b1, b2) ou (y1, y2) sont des coefficients liés à l'ensemble monté.

**Patentansprüche**

1. Verfahren zur Feststellung einer Belastung, die auf einen Luftreifen unter Fahrbedingungen, in einem zur Bildung einer montierten Einheit an einem Rad montierten Zustand, ausgeübt wird, wobei der Luftreifen einen Gürtel, zwei Seitenwände und zwei Wülste, die um eine natürliche Rotationsachse drehen, und eine Mittelebene aufweist, wobei der Schnittpunkt der Mittelebene und der natürlichen Rotationsachse einen Radmittelpunkt definiert, umfassend die folgenden Schritte:

- Befestigen mindestens eines Sensors an dem Luftreifen direkt unter dem Gürtel mit einer radialen Position R bezogen auf die natürliche Rotationsachse in seinem montierten Zustand, der geeignet ist, mindestens ein Ausgangssignal zu erzeugen, das proportional zu der Beschleunigung ist, die der Sensor in dem Luftreifen erfährt;
- Versetzen der montierten Einheit in die Fahrbedingung mit einer Drehzahl W unter einer Belastung Z;
- Durchführen der Erfassung mindestens eines ersten Signals (1, 1bis) auf der Abszisse u, das mindestens die Amplitude der Beschleunigung entlang der zum Gürtel senkrechten Richtung bei einem Fahren mit der Drehzahl W umfasst; wobei dieses Verfahren durch die folgenden zusätzlichen Schritte gekennzeichnet ist:
- Bestimmen einer Referenzbeschleunigung $\gamma^{reference}$ (4, 6), die eine Funktion der Drehzahl W und der Position des mindestens einen Sensors ist;
- Identifizieren einer ersten Reihe von Inkrementen I, die der Abszisse u des mindestens einen ersten Signals entsprechen, wo das Signal einen Schwellenwert B (3, 5) überquert.
- Begrenzen des ersten Signals (1, 1bis) zwischen einem ersten Inkrement $I_{min}$ und einem zweiten Inkrement $I_{max}$, um ein Radumdrehungssignal $Sig^{TdR}$ (2, 7, 10) zu konstruieren;
- Definieren mindestens einer ersten Energiedichte S, die eine Funktion des Radumdrehungssignals $Sig^{TdR}$ (2, 7, 10), der Referenzbeschleunigung $\gamma^{reference}$ (4,6) ist, $S^+$ genannt, wenn das Radumdrehungssignal größer als ein Schwellenwert A (11) ist, oder $S^-$ genannt, wenn das Radumdrehungssignal (2, 7, 10) kleiner als oder gleich dem Schwellenwert A (11) ist;
- Identifizieren der Verformung des Luftreifens $Def_\%$ als eine Funktion der Referenzbeschleunigung $\gamma^{reference}$ (4, 6) und der ersten Energiedichte S.
- Bestimmen der Belastung Z, die auf die montierte Einheit ausgeübt wird, mithilfe einer bijektiven Funktion F (1001, 1002, 1003), die als Parameter mindestens die Verformung des Luftreifens $Def_\%$ umfasst.

**2.** Verfahren zur Feststellung einer auf einen Luftreifen ausgeübten Belastung nach Anspruch 1, bei dem die Erfassung des ersten Signals (1, 1bis) bei einer Drehzahl W durchgeführt wird, die größer als oder gleich einer Schwellendrehzahl $W_{seuil}$ ist, die durch die folgende Formel definiert wird:

$$W_{seuil} = \frac{12}{\sqrt{Dev}} \; ;$$

worin Dev die Abwicklung des Luftreifens ist.

**3.** Verfahren zur Feststellung einer auf einen Luftreifen ausgeübten Belastung nach einem der Ansprüche 1 bis 2, bei dem die erste Reihe von Inkrementen I durch die Kombination der folgenden Schritte identifiziert wird:

- Definieren eines Schwellenwerts B (3, 5), der eine Funktion des mindestens einen Maximums mindestens eines Teils des ersten Signals (1, 1bis) ist, bevorzugt ein Wert zwischen 0,1 und 0,5 des mindestens einen Maximums mindestens eines Teils des ersten Signals (1, 1bis);
- Bestimmen eines zweiten Abszissensignals u als eine Funktion des. mindestens einen Teils des ersten Signals (1, 1bis) und des Schwellenwerts B (3, 5);
- Identifizieren der ersten Reihe der Inkremente I, die der Abszisse u des mindestens einen Teils des ersten Signals (1, 1bis) und des zweiten Signals entsprechen, wo das zweite Signal einen Schwellenwert E überquert, wobei bevorzugt, wenn das zweite Signal durch die Differenz zwischen dem ersten Signal (1, 1bis) und dem Schwellenwert B (3, 5) erhalten wird, der Schwellenwert E der Wert null ist, oder, wenn das zweite Signal durch das Verhältnis zwischen dem ersten Signal (1, 1bis) und dem Schwellenwert B (3, 5) erhalten wird, der Schwellenwert E der Wert eins ist.

**4.** Verfahren zur Feststellung einer auf einen Luftreifen ausgeübten Belastung nach einem der Ansprüche 1 bis 3, bei dem die Identifizierung der Inkremente die folgenden Schritte umfasst:

- Erstellen einer zweiten Reihe von Inkrementen J, die der dazwischen liegenden Abszisse u entsprechen, die bevorzugt zwischen einem Achtel und sieben Achteln liegt, besonders bevorzugt bei der medianen Länge der Länge, die durch die Abszissen u der Inkremente I mit identischen und aufeinander folgenden Paritäten definiert wird, und
- Konstruieren des Radumdrehungssignals $Sig^{TdR}$ (7) zwischen einem ersten Inkrement $J_{min}$ und einem zweiten Inkrement $J_{max}$.

**5.** Verfahren zur Feststellung einer auf einen Luftreifen ausgeübten Belastung nach einem der vorhergehenden Ansprüche, bei dem der Schwellenwert A (11) eine Funktion der Referenzbeschleunigung $\gamma^{reference}$ (4, 6) ist, der Schwellenwert A (11) bevorzugt auch eine Funktion eines Faktors C größer als oder gleich 0.5 und kleiner als oder gleich 0.9 nach der folgenden Formel ist:

$$A = C * \gamma^{Reference}$$

**6.** Verfahren zur Feststellung einer auf einem Luftreifen ausgeübten Belastung nach einem der Ansprüche 1 bis 5, bei dem die Referenzbeschleunigung $\gamma^{reference}$ (4, 6), die eine Funktion der radialen Position R des mindestens einen Sensors ist, durch die folgende Formel definiert wird:

$$\gamma^{reference} = R * W^2$$

**7.** Verfahren zur Feststellung einer auf einen Luftreifen ausgeübten Belastung nach einem der Ansprüche 1 bis 5, bei dem die Bestimmung der Referenzbeschleunigung $\gamma^{reference}$ (4, 6) definiert ist als der Mittelwert von mindestens einem Teil des ersten Signals (1, 1bis), das zwischen zwei Inkrementen mit identischer Parität liegt, die der ersten Inkrementreihe angehören.

**8.** Verfahren zur Feststellung einer auf einen Luftreifen ausgeübten Belastung nach einem der vorhergehenden Ansprüche, bei dem, nachdem das Radumdrehungssignal $Sig^{TdR}$ (2, 7, 10) in Bezug auf eine Winkelposition des Luftreifens phasiert wurde, eine Korrektur Corr an dem Radumdrehungssignal $Sig^{TdR}$ (2, 7, 10) vorgenommen wird, um die Wirkung der Erdschwerkraft zu berücksichtigen.

9. Verfahren zur Feststellung einer auf einen Luftreifen ausgeübten Belastung nach einem der Ansprüche 1 bis 8, wobei das Verfahren die folgenden Schritte umfasst:

- Bestimmen einer ersten Anzahl von Durchgängen $N^{Pas}$ des Radumdrehungssignals $Sig^{TdR}$ (2, 7, 10) als die kleinste ganze Zahl, die größer oder gleich der Hälfte der Differenz zwischen dem zweiten Inkrement ($J_{max}$, $I_{max}$) und dem ersten Inkrement ($I_{min}$, $J_{min}$) des Radumdrehungssignals $Sig^{TdR}$ (2, 7, 10) ist;
- Bestimmen einer zweiten Anzahl von Durchgängen $N'^{Pas}$ des Radumdrehungssignals $Sig^{TdR}$ (2, 7, 10) als der ganzzahlige Teil der Hälfte der Differenz zwischen dem zweiten Inkrement ($J_{max}$, $I_{max}$) und dem ersten Inkrement ($I_{min}$, $J_{min}$) des Radumdrehungssignals $Sig^{TdR}$ (2, 7, 10); Wenn das erste Inkrement ($I_{min}$) ein Inkrement ist, das der Abszisse u des ersten Signals entspricht, wo das erste Signal (1, 1bis) den Schwellenwert B (3, 5) nach unten überquert, dann umfasst das Verfahren den folgenden Schritt:
- Identifizieren der Verformung des Luftreifens $Def_\%$, der eine Belastung erfährt, durch die folgenden Formeln:

$$Def_\% = \frac{(S^-)}{(N^{Pas} * \gamma^{Reference})} = \frac{(S^+)}{(N'^{Pas} * \gamma^{Reference})} = \frac{1}{2} \times \left[ \left( \frac{(S^+)}{(N'^{Pas} * \gamma^{Reference})} + \frac{(S^-)}{(N^{Pas} * \gamma^{Reference})} \right) \right]$$

Ansonsten umfasst das Verfahren den folgenden Schritt:
- Identifizieren der Verformung des Luftreifens Def%, der eine Belastung erfährt, durch die folgenden Formeln:

$$Def_\% = \frac{(S^+)}{(N^{Pas} * \gamma^{Reference})} = \frac{(S^-)}{(N'^{Pas} * \gamma^{Reference})} = \frac{1}{2} \times \left[ \left( \frac{(S^+)}{(N^{Pas} * \gamma^{Reference})} + \frac{(S^-)}{(N'^{Pas} * \gamma^{Reference})} \right) \right]$$

10. Verfahren zur Feststellung einer auf einen Luftreifen ausgeübten Belastung nach Anspruch 9, bei dem, wenn $N^{pas}$ und $N'^{pas}$ untereinander gleich sind und gleich der Radumdrehungsanzahl $N^{TdR}$ sind, die Verformung des Luftreifens $Def_\%$, der eine Belastung erfährt, durch eine der folgenden Formeln bestimmt wird:

$$Def_\% = \frac{(S)}{(N^{TdR} * \gamma^{Reference})} ,$$

oder

$$Def_\% = \frac{(S^+ + S^-)}{(2 * N^{TdR} * \gamma^{Reference})}$$

11. Verfahren zur Feststellung einer auf einen Luftreifen ausgeübten Belastung nach einem der vorhergehenden Ansprüche, bei dem die Erfassung des ersten Signals (1, 1bis) bei einer konstanten Abtastfrequenz erfolgt und die räumliche Diskretisierung der Abtastung des ersten Signals (1, 1bis) weniger als 6 Grad, bevorzugt weniger als 3 Grad, besonders bevorzugt weniger als 1 Grad beträgt.

12. Verfahren zur Feststellung einer auf einen Luftreifen ausgeübten Belastung nach Anspruch 11 in Kombination mit Anspruch 7, bei dem die Bestimmung der Referenzbeschleunigung $\gamma^{reference}$ (4, 6) durch die folgende Formel erhalten wird:

$$\gamma^{reference} = \left| \frac{\left(\sum_{Sig^{TdR}} Sig^{TdR}\right)}{N^V} \right|$$

worin $N^v$ die Gesamtzahl diskretisierter Punkte auf dem Radumdrehungssignal $Sig^{TdR}(2, 7, 10)$ ist.

13. Verfahren zur Feststellung einer auf einen Luftreifen ausgeübten Belastung nach Anspruch 11 in Kombination mit Anspruch 9, bei dem die negative Energiedichte $S^-$ und die positive Energiedichte $S^+$ nach den folgenden Formeln erhalten werden:

- Wenn das erste Inkrement ($I_{min}$) ein Inkrement ist, das der Abszisse u des ersten Signals entspricht, wo das erste Signal (1, 1bis) den Schwellenwert B (3, 5) nach unten überquert, dann:

$$S^+ = \left[ \sum_{Sig^{TdR} >} {}_A\left(Sig^{TdR} - \gamma^{Reference}\right) \right] * \frac{N'^{Pas}}{N^v} \;;$$

und

$$S^- = \left[ \sum_{Sig^{TdR} \le} {}_A\left(Sig^{TdR} - \gamma^{Reference}\right) \right] * \frac{N^{Pas}}{N^v} \;;$$

- Ansonsten:

$$S^+ = \left[ \sum_{Sig^{TdR} >} {}_A\left(Sig^{TdR} - \gamma^{Reference}\right) \right] * \frac{N^{Pas}}{N^v} \;;$$

und

$$S^- = \left[ \sum_{Sig^{TdR} \le} {}_A\left(Sig^{TdR} - \gamma^{Reference}\right) \right] * \frac{N'^{Pas}}{N^v} \;;$$

worin $N^v$ die Gesamtzahl diskretisierter Punkte auf dem Radumdrehungssignal $Sig^{TdR}$ ist.

14. Verfahren zur Feststellung einer auf einen Luftreifen ausgeübten Belastung nach dem vorhergehenden Anspruch, bei dem, wenn $N^{pas}$ und $N'^{pas}$ untereinander gleich sind und gleich der Radumdrehungsanzahl $N^{TdR}$ sind, die negative Energiedichte $S^-$ und die positive Energiedichte $S^+$ durch die folgenden Formeln erhalten werden:

$$S^+ = \left[ \sum_{Sig^{TdR} >} {}_A\left(Sig^{TdR} - \gamma^{Reference}\right) \right] * \frac{N^{TdR}}{N^v} \;;$$

und

$$S^- = \left[ \sum_{Sig^{TdR} \le} {}_A\left(Sig^{TdR} - \gamma^{Reference}\right) \right] * \frac{N^{TdR}}{N^v} \;;$$

worin $N^u$ die Gesamtzahl diskretisierter Punkte auf dem Radumdrehungssignal $Sig^{TdR}$ ist

**15.** Verfahren zur Feststellung einer auf einen Luftreifen ausgeübten Belastung nach Anspruch 11 in Kombination mit Anspruch 7, bei dem:

Bei einer vorbereitenden Phase, die die folgenden Schritte umfasst:

- Einfrieren einer ersten konstanten Abtastfrequenz fe1;
- Begrenzen eines Teils des ersten Signals (1, 1bis) durch zwei Inkremente mit identischer Parität, die derselben Inkrementreihe angehören, um ein erstes Radumdrehungssignal $Sig^{TdR1}(2)$ zu konstruieren: (
- Schätzen einer ersten Referenzbeschleunigung $\gamma^{referencel}$ (4, 6) nach der folgenden Formel

$$\gamma^{referencel} = \frac{\left(\sum_{Sig^{TdR1}} Sig^{TdR1}\right)}{N^{U1}}$$

worin $N^{U1}$ die Anzahl von Punkten von $Sig^{TdR1}$ ist Bei der Hauptphase:

- Einfrieren einer zweiten konstanten Abtastfrequenz fe2;
- Begrenzen eines anderen Teils des ersten Signals (1, 1bis) durch zwei Inkremente mit identischer Parität, die derselben Inkrementreihe angehören, um ein zweites Radumdrehungssignal $Sig^{TdR2}(7)$ zu konstruieren:
- Definieren mindestens einer ersten Energiedichte S, die eine Funktion des zweiten Radumdrehungssignals $Sig^{TdR2}$ (7, 10) :, der Referenzbeschleunigung $\gamma^{reference}$ (4, 6) : ist, $S^+$ genannt, wenn das Radumdrehungssignal (7, 10) größer als ein Schwellenwert A (11) ist, oder $S^-$ genannt, wenn das Radumdrehungssignal (7, 10) kleiner als oder gleich dem Schwellenwert A (11) ist, nach den folgenden Formeln:

$$S^+ = \left[\sum_{Sig^{TdR2} >}{}_A \left(Sig^{TdR2} - \gamma^{Reference\,1}\right)\right] * \frac{N^{TdR2}}{N^{U2}};$$

und

$$S^- = \left[\sum_{Sig^{TdR2} \leq}{}_A \left(Sig^{TdR2} - \gamma^{Reference\,1}\right)\right] * \frac{N^{TdR2}}{N^{U2}};$$

worin $N^{U2}$ die Anzahl von Punkten von $Sig^{TaR2}$ ist;

- Identifizieren der Verformung des Luftreifens $Def_\%$, die durch die Belastung Z erzeugt wird, als eine Funktion der Referenzbeschleunigung $\gamma^{reference}$ (4, 6) und der ersten Energiedichte S nach einer der folgenden Formeln:

$$Def_\% = \frac{N^{U1}}{N^{U2}} * \frac{\left[\sum_{Sig^{TdR2} >}{}_A \left(Sig^{TdR2} - \gamma^{Reference\,1}\right)\right]}{\left(\sum_{Sig^{TdR1}} Sig^{TdR1}\right)},$$

oder

$$Def_\% = \frac{N^{U1}}{N^{U2}} * \frac{\left[\sum_{signal^{TdR2} \leq}{}_A \left(Sig^{TdR2} - \gamma^{Reference\,1}\right)\right]}{\left(\sum_{Sig^{TdR1}} Sig^{TdR1}\right)},$$

oder

$$Def_{\%} = \frac{N^{U1}}{N^{U2}}$$

$$* \frac{\left[\sum_{Sig^{TdR2} > A}\left(Sig^{TdR2} - \gamma^{Reference\ 1}\right)\right] + \left[\sum_{Sig^{TdR2} \leq A}\left(Sig^{TdR2} - \gamma^{Reference\ 1}\right)\right]}{2 * \left[\sum_{Sig^{TdR1}} Sig^{TdR1}\right]}$$

16. Verfahren zur Feststellung einer auf einen Luftreifen ausgeübten Belastung nach dem vorhergehenden Anspruch, bei dem die Begrenzung des ersten Signals (1, 1bis) auf eine Anzahl $N^{TdR2}$ die folgenden Schritte umfasst:

Bei der vorbereitenden Phase:

- Identifizieren der Periode T1 nach der folgenden Formel:

$$T_1 = \frac{N^{U1}}{fe1\ N^{TdR1}}$$

Bei der Hauptphase;

- Konstruieren eines zweiten Radumdrehungssignals $Sig^{TaR2}$ (7, 10) : beginnend mit der ersten Abszisse u des ersten Signals (1, 1bis), das bei (1+M)/4 Perioden T1 liegt, wobei M eine positive reale Zahl kleiner oder gleich 2.0 ist, M bevorzugt der Wert eins ist, nach dem Ende des ersten Radumdrehungssignals $Sig^{TdR1}$ (2) : ;
- Begrenzen des zweiten Radumdrehungssignals $Sig^{TdR2}$ (7, 10): auf eine Dauer t2, entsprechend der Periode T1 multipliziert mit einer natürlichen ganzen Zahl N2, N2 ist bevorzugt der Wert eins;
- Die Radumdrehungsanzahl $N^{TdR2}$ ist gleich N2;
- Identifizieren einer ersten Reihe von Inkrementen K, entsprechend der Abszisse u des ersten Signals (1, 1bis), beginnend mit der Abszisse u, die dazu gedient hat, das erste Radumdrehungssignal $Sig^{TdR1}$(2) zu beenden:, wo das erste Signal (1, 1bis) einen Schwellenwert E' über- oder unterschreitet, bevorzugt kleiner als oder gleich der Hälfte der ersten Referenzbeschleunigung $\gamma^{referencel}$ (4, 6);
- Bestimmen von $N'^{U2}$ als die Anzahl von Punkten des ersten Signals (1, 1bis):
- die zwischen den Inkrementen $K_1$ und $K_{N2+1}$ gelegen sind, mit der Formel:

$$N'^{U2} = \left. \frac{(U_{KN2+1} - U_{K1})}{N2} * N2 \right| ;$$

- oder die zwischen den Inkrementen $K_1$ und $K_{N2+2}$ gelegen sind, mit der Formel:

$$N'^{U2} = \left. \frac{(U_{KN2+2} - U_{K1})}{N2+1} * N2 \right| .$$

17. Verfahren zur Feststellung einer auf einen Luftreifen ausgeübten Belastung nach einem der Ansprüche 15 bis 16, bei dem die Identifizierung der Verformung des Luftreifens $Def_{\%}$ die folgenden Schritte umfasst:

Bei der Hauptphase:

- Bestimmen einer zweiten Referenzbeschleunigung $\gamma^{reference2}$ (4, 6), die dem zweiten Radumdrehungssignal $Sig^{TdR2}$(7, 10) zugeordnet ist:, wobei diese als der Mittelwert des zweiten Radumdrehungssignals $Sig^{TaR2}$ (7, 10) : zurückgeführt auf eine Radumdrehung ist, nach der folgenden Formel:

$$\gamma^{reference2} = \frac{(\Sigma_{sig_{TdR2}} Sig^{TdR2})}{N^{U2}};$$

- Identifizieren eines Werts O als der Wert $N^{U2}$, außer wenn $N'^{U2}$ existiert, dann ist der Wert O $N'^{U2}$;
- Identifizieren der Verformung des Luftreifens $Def_\%$, die durch die Belastung erzeugt wird, nach einer der folgenden Formeln:

$$Def_\% = \frac{N^{U1}}{O} * \frac{[S^+ + (\gamma^{reference1} - \gamma^{reference2}) * N^{TdR2}]}{(N^{TdR2} * \gamma^{reference1})},$$

oder

$$Def_\% = \frac{N^{U1}}{O} * \frac{(S^-)}{(N^{TdR2} * \gamma^{reference1})},$$

oder

$$Def_\% = \frac{N^{U1}}{O} * \frac{[S^+ + S^- + (\gamma^{reference1} - \gamma^{reference2}) * N^{TdR2}]}{2 * (N^{TdR2} * \gamma^{reference1})}.$$

**18.** Verfahren zur Feststellung einer auf einen Luftreifen ausgeübten Belastung nach einem der Ansprüche 1 bis 17, bei dem die bijektive Funktion F (1001, 1002, 1003) eine affine Funktion oder eine Potenzfunktion nach den folgenden Formeln ist:

$$F(U) = A * U + B;$$

oder

$$F(U) = X * (U)^Y;$$

worin (A, B) oder (X, Y) mit der montierten Einheit zusammenhängende Parameter sind.

**19.** Verfahren zur Feststellung einer auf einen Luftreifen ausgeübten Belastung nach dem vorhergehenden Anspruch, bei dem, wenn die montierte Einheit mit dem Fülldruck P aufgepumpt ist, die Parameter A oder X mindestens von dem Fülldruck P abhängig sind, die Bestimmung der auf die montierte Einheit ausgeübten Belastung Z eine Bestimmung des Fülldrucks P der montierten Einheit umfasst.

**20.** Verfahren zur Feststellung einer auf einen Luftreifen ausgeübten Belastung nach dem vorhergehenden Anspruch, bei dem die Parameter A oder X eine affine Funktion des Fülldrucks P nach der folgenden Formel sind:

$$A = a1 * P + a2;$$

oder

$$X = x1 * P + x2;$$

worin (a1, a2) oder (x1, x2) mit der montierten Einheit zusammenhängende Koeffizienten sind.

**21.** Verfahren zur Feststellung einer auf einen Luftreifen ausgeübten Belastung nach einem der Ansprüche 19 bis 20, bei dem die Parameter B oder Y mindestens von dem Fülldruck P abhängig sind.

**22.** Verfahren zur Feststellung einer auf einen Luftreifen ausgeübten Belastung nach dem vorhergehenden Anspruch, bei dem die Parameter B oder Y eine affine Funktion des Fülldrucks P nach der folgenden Formel sind:

$$B=b1*P+b2;$$

oder

$$Y=y1*P+y2;$$

worin (b1, b2) oder (y1, y2) mit der montierten Einheit zusammenhängende Koeffizienten sind.

**Claims**

**1.** Method for obtaining a load applied to a tyre casing in rolling conditions, in a wheel mounted state in order to form a mounted assembly, said tyre casing having a crown, two sidewalls and two beads revolving about a natural axis of rotation and a median plane, the intersection of the median plane and the natural axis of rotation defining a wheel centre, comprising the following steps:

- fastening at least one sensor to the tyre casing in line with the crown having a radial position R relative to the natural axis of rotation in its mounted state and being able to generate at least one output signal proportional to the acceleration experienced by said sensor in the tyre casing;
- placing the mounted assembly in rolling conditions at a rotation speed W, subjected to a load Z;
- acquiring at least one first signal (1, 1bis) of the abscissa u comprising at least the amplitude of the acceleration in the direction normal to the crown while rolling at the rotation speed W;
- determining a reference acceleration $\gamma^{reference}$ (4, 6) that is a function of the rotation speed W and of the position of the at least one sensor;
- identifying a first series of increments I, corresponding to the abscissa u of the at least one first signal where the first signal crosses a threshold value B (3, 5);
- delimiting the first signal (1, 1bis) between a first increment $I_{min}$ and a second increment $I_{max}$ so as to construct a wheel revolution signal $Sig^{TdR}$ (2, 7, 10);
- defining at least one first energy density S that is a function of the wheel revolution signal $Sig^{TdR}$ (2, 7, 10), and of the reference acceleration $\gamma^{reference}$ (4, 6), denoted $S^+$ when the wheel revolution signal is above a threshold value A (11), or denoted $S^-$ when the wheel revolution signal (2, 7, 10) is below or equal to said threshold A (11);
- identifying the deformation experienced by the tyre casing $Def_\%$, as a function of the reference acceleration $\gamma^{reference}$ (4, 6) and of the first energy density S;
- determining the load Z applied to the mounted assembly using a bijective function F (1001, 1002, 1003) comprising at least the deformation of the tyre casing $Def_\%$ as a parameter.

**2.** Method for obtaining a load applied to a tyre casing according to Claim 1, wherein the first signal (1, 1bis) is acquired for a rotation speed W greater than or equal to a threshold rotation speed $W_{threshold}$ defined by the following formula:

$$W_{seuil} = \frac{12}{\sqrt{Dev}}$$
;

where Dev is the distance travelled by the tyre casing.

**3.** Method for obtaining a load applied to a tyre casing according to any one of Claims 1 and 2, wherein the first series of increments I is identified using the combination of the following steps:

- defining a threshold value B (3, 5) that is a function of the at least one maximum of at least one portion of the first signal (1, 1 bis), preferably a value ranging between 0.1 and 0.5 of the at least one maximum of at least one portion of the first signal (1, 1 bis);

- determining a second signal of the abscissa u as being a function of the at least one portion of the first signal (1, 1bis) and of the threshold value B (3, 5);

- identifying the first series of increments I, corresponding to the abscissa u of the at least one portion of the first signal (1, 1bis) and of the second signal where the second signal crosses a threshold E, with the second signal preferably being obtained using the difference between the first signal (1, 1bis) and the threshold value B (3, 5), the threshold E is zero, or the second signal being obtained by the ratio between the first signal (1, 1bis) and the threshold value B (3, 5), the threshold E is the unit value.

4. Method for obtaining a load applied to a tyre casing according to any one of Claims 1 to 3, wherein identifying the increments comprises the following steps:

- creating a second series of increments J corresponding to the intermediate abscissa u, preferably located between one eighth and seven eighths, and highly preferably located at the median length, of the length defined by the abscissae u of the increments I with consecutive and identical parities; and
- constructing the wheel revolution signal $Sig^{TdR}$ (7) between a first increment $J_{min}$ and a second increment $J_{max}$.

5. Method for obtaining a load applied to a tyre casing according to any of the preceding claims, wherein the threshold A (11) is a function of the reference acceleration $\gamma^{reference}$(4, 6), preferably, the threshold A (11) is also a function of a factor C greater than or equal to 0.5 and less than or equal to 0.9 using the following formula:

$$A = C * \gamma^{Reference}$$

6. Method for obtaining a load applied to a tyre casing according to any of Claims 1 to 5, wherein the reference acceleration $\gamma^{reference}$ (4, 6), which is a function of the radial position R of the at least one sensor, is defined using the following formula:

$$\gamma^{reference} = R * W^2$$

7. Method for obtaining a load applied to a tyre casing according to any of Claims 1 to 5, wherein determining the reference acceleration $\gamma^{reference}$ (4, 6) is defined as being the mean value of at least one portion of the first signal (1, 1bis) included between two increments with identical parity belonging to the same series of increments.

8. Method for obtaining a load applied to a tyre casing according to any of the preceding claims, wherein, having phase-locked the wheel revolution signal $Sig^{TdR}$ (2, 7, 10) relative to an angular position of the tyre casing, a correction Corr is applied to the wheel revolution signal $Sig^{TdR}$ (2, 7, 10) in order to take into account the effect of the Earth's gravity.

9. Method for obtaining a load applied to a tyre casing according to any one of Claims 1 to 8, the method comprising the following steps:

- determining a first number of passes $N^{Pas}$ of the wheel revolution signal $Sig^{TdR}$ (2, 7, 10) as being the integer part in excess of half the difference between the second increment ($J_{max}$, $I_{max}$) and the first increment ($I_{min}$, $J_{min}$) of the wheel revolution signal $Sig^{TdR}$ (2, 7, 10);
- determining a second number of passes $N'^{Pas}$ of the wheel revolution signal $Sig^{TdR}$ (2, 7, 10) as being the integer part of half the difference between the second increment ($J_{max}$, $I_{max}$) and the first increment ($I_{min}$, $J_{min}$) of the wheel revolution signal $Sig^{TdR}$ (2, 7, 10);

if the first increment ($I_{min}$) is an increment corresponding to the abscissa u of the first signal (1, 1bis) where the first signal crosses the threshold value B (3, 5) in a downwards direction, then the method comprises the following step:

- identifying the deformation of the tyre casing $Def_{\%}$, which casing is subjected to a load, using the following formulae:

$$Def_\% = \frac{(S^-)}{(N^{Pas} * \gamma^{Reference})} = \frac{(S^+)}{(N'^{Pas} * \gamma^{Reference})} = \frac{1}{2} * \left[ \left( \frac{(S^+)}{(N'^{Pas} * \gamma^{Reference})} \right) + \left( \frac{(S^-)}{(N^{Pas} * \gamma^{Reference})} \right) \right]$$

otherwise, the method comprises the following step:

- identifying the deformation of the tyre casing Def$_\%$, which casing is subjected to a load, using the following formulae:

$$Def_\% = \frac{(S^+)}{(N^{Pas} * \gamma^{Reference})} = \frac{(S^-)}{(N'^{Pas} * \gamma^{Reference})} = \frac{1}{2} * \left[ \left( \frac{(S^+)}{(N^{Pas} * \gamma^{Reference})} \right) + \left( \frac{(S^-)}{(N'^{Pas} * \gamma^{Reference})} \right) \right]$$

**10.** Method for obtaining a load applied to a tyre casing according to Claim 9, wherein N$^{pas}$ and N'$^{pas}$ are equal to each other and are equal to the number of wheel revolutions N$^{TdR}$, the deformation of the tyre casing Def$_\%$ subjected to a load is determined using one of the following formulae:

$$Def_\% = \frac{(S)}{(N^{TdR} * \gamma^{Reference})}$$

,

or

$$Def_\% = \frac{(S^+ + S^-)}{(2 * N^{TdR} * \gamma^{Reference})}$$

**11.** Method for obtaining a load applied to a tyre casing according to any one of the preceding claims, wherein the first signal (1, 1bis) is acquired at a constant sampling frequency and the spatial discretization of the sampling of the first signal (1, 1bis) is less than 6 degrees, preferably less than 3 degrees, and highly preferably less than 1 degree.

**12.** Method for obtaining a load applied to a tyre casing according to Claim 11 in combination with Claim 7, wherein determining the reference acceleration $\gamma^{reference}$ (4, 6) is obtained using the following formula:

$$\gamma^{reference} = \frac{\left( \sum_{Sig^{TdR}} Sig^{TdR} \right)}{N^V}$$

where N$^V$ is the total number of points discretized over the wheel revolution signal Sig$^{TdR}$(2, 7, 10).

**13.** Method for obtaining a load applied to a tyre casing according to Claim 11 in combination with Claim 9, wherein the energy densities that are negative S$^-$ and positive S$^+$ are defined using the following formulae:

- if the first increment (I$_{min}$) is an increment corresponding to the abscissa u of the first signal where the first signal (1, 1bis) crosses the threshold value B (3, 5) in a downwards direction, then:

$$S^+ = \left| \sum_{Sig^{TdR} > A} (Sig^{TdR} - \gamma^{Reference}) \right| * \frac{N'^{Pas}}{N^V}$$

;

and

$$S^- = \left|\sum_{Sig^{TdR} \leq A}(Sig^{TdR} - \gamma^{Reference})\right| * \frac{N^{Pas}}{N^V};$$

- otherwise:

$$S^+ = \left|\sum_{Sig^{TdR} > A}(Sig^{TdR} - \gamma^{Reference})\right| * \frac{N^{Pas}}{N^V};$$

and

$$S^- = \left|\sum_{Sig^{TdR} \leq A}(Sig^{TdR} - \gamma^{Reference})\right| * \frac{N'^{Pas}}{N^V};$$

where $N^V$ is the total number of points discretized over the wheel revolution signal $Sig^{TdR}$.

14. Method for obtaining a load applied to a tyre casing according to the preceding claim, wherein $N^{pas}$ and $N'^{pas}$ are equal to each other and are equal to the number of wheel revolutions $N^{TdR}$, the energy densities that are negative $S^-$ and positive $S^+$ are obtained using the following formulae:

$$S^+ = \left|\sum_{Sig^{TdR} > A}(Sig^{TdR} - \gamma^{Reference})\right| * \frac{N^{TdR}}{N^U};$$

and

$$S^- = \left|\sum_{Sig^{TdR} \leq A}(Sig^{TdR} - \gamma^{Reference})\right| * \frac{N^{TdR}}{N^U};$$

where $N^U$ is the total number of points discretized over the wheel revolution signal $Sig^{TdR}$

15. Method for obtaining a load applied to a tyre casing according to Claim 11 in combination with Claim 7, wherein it comprises the following steps:

during a preliminary phase comprising the following steps:

- setting a constant first sampling frequency fe1;
- delimiting a portion of the first signal (1, 1bis) by two increments with identical parity belonging to the same series of increments in order to construct a first wheel revolution signal $Sig^{TdR1}$ (2);
- evaluating a first reference acceleration $\gamma^{reference1}$ (4, 6) using the following formula:

$$\gamma^{reference1} = \frac{\left(\sum_{Sig^{TdR1}} Sig^{TdR1}\right)}{N^{U1}}$$

where $N^{U1}$ is the number of points of $Sig^{TdR1}$;

during the main phase:

- setting a constant second sampling frequency fe2;
- delimiting another portion of the first signal (1, 1bis) by two increments with identical parity belonging to the same series of increments in order to construct a second wheel revolution signal $Sig^{TdR2}$ (7, 10);
- defining at least a first energy density S that is a function of the second wheel revolution signal $Sig^{TdR2}$ (7, 10) and of the reference acceleration $\gamma^{reference1}$ (4,6), denoted $S^+$ when the wheel revolution signal (7, 10) is above a threshold value A (11), or denoted $S^-$ when the wheel revolution signal (7, 10) is below or equal to said threshold A (11), using the following formulae:

$$S^+ = \left|\sum_{Sig^{TdR2}>A}(Sig^{TdR2} - \gamma^{Reference1})\right| * \frac{N^{TdR2}}{N^{U2}};$$

and

$$S^- = \left|\sum_{Sig^{TdR2}\leq A}(Sig^{TdR2} - \gamma^{Reference1})\right| * \frac{N^{TdR2}}{N^{U2}};$$

where $N^{U2}$ is the number of points of $Sig^{TdR2}$;
- identifying the deformation of the tyre casing $Def_{\%}$ generated by the load Z as a function of the reference acceleration $\gamma^{reference1}$ (4, 6) and of the first energy density S using one of the following formulae:

$$Def_{\%} = \frac{N^{U1}}{N^{U2}} * \frac{\left|\sum_{Sig^{TdR2}>A_0}(Sig^{TdR2}-\gamma^{Reference1})\right|}{\left(\sum_{Sig^{TdR1}}Sig^{TdR1}\right)};$$

or

$$Def_{\%} = \frac{N^{U1}}{N^{U2}} * \frac{\left|\sum_{Signal^{TdR2}\leq A}(Sig^{TdR2}-\gamma^{Reference1})\right|}{\left(\sum_{Sig^{TdR1}}Sig^{TdR1}\right)};$$

or

$$Def_{\%} = \frac{N^{U1}}{N^{U2}} * \frac{\left|\sum_{Sig^{TdR2}>A}(Sig^{TdR2}-\gamma^{Reference1})\right|+\left|\sum_{Sig^{TdR2}\leq A}(Sig^{TdR2}-\gamma^{Reference1})\right|}{2*\left(\sum_{Sig^{TdR1}}Sig^{TdR1}\right)}$$

16. Method for obtaining a load applied to a tyre casing according to the preceding claim, wherein delimiting the first signal (1, 1bis) over a number $N^{TdR2}$ comprises the following steps:

during the preliminary phase:

- identifying the period $T_1$ using the following formula:

$$T_1 = \frac{N^{U1}}{fe1 * N^{TdR1}}$$

during the main phase:

- constructing a second wheel revolution signal $Sig^{TdR2}$ (7, 10) beginning with the first abscissa u of the first signal (1, 1bis) located at (1+M)/4 periods $T_1$, with M being a real positive number less than or equal to 2.0, preferably M is equal to the unit value, after the end of the first wheel revolution signal $Sig^{TdR1}$ (2);

- delimiting the second wheel revolution signal $\text{Sig}^{\text{TdR2}}$ (7, 10) over a duration t2 corresponding to the period $T_1$ multiplied by a natural whole number N2, N2 preferably is the unit value;
- the number of wheel revolutions $N^{\text{TdR2}}$ is equal to N2;
- identifying a first series of increments K, corresponding to the abscissa u of the first signal (1, 1bis), beginning with the abscissa u used to end the first wheel revolution signal $\text{Sig}^{\text{TdR1}}$ (2), where the first signal (1, 1bis) passes above or below a threshold value E', preferably less than or equal to half the first reference acceleration $\gamma^{\text{reference1}}$ (4, 6);
- determining $N'^{\text{U2}}$ as being the number of points of the first signal (1, 1bis):
- located between the increments $K_1$ and $K_{N2+1}$, using the formula:

$$N'^{U2} = \frac{\left(U_{K_{N2+1}} - U_{K_1}\right)}{N2} * N2$$
;

- or located between the increments $K_1$ and $K_{N2+2}$, using the formula:

$$N'^{U2} = \frac{\left(U_{K_{N2+2}} - U_{K_1}\right)}{N2+1} * N2$$

17. Method for obtaining a load applied to a tyre casing according to any of Claims 15 to 16, wherein identifying the deformation of the tyre casing $\text{Def}_\%$ comprises the following steps:

during the main phase:

- determining a second reference acceleration $\gamma^{\text{reference2}}$ (4, 6) associated with the second wheel revolution signal $\text{Sig}^{\text{TdR2}}$ (7, 10), said acceleration being defined as being the mean value of the second wheel revolution signal $\text{Sig}^{\text{TdR2}}$ (7, 10), relative to one wheel revolution using the following formula:

$$\gamma^{\text{reference2}} = \frac{\left(\sum_{Sig^{TdR2}} Sig^{TdR2}\right)}{N^{U2}}$$
;

- identifying a value O as being the value $N^{\text{U2}}$ unless $N'^{\text{U2}}$ exists, then the value O is $N'^{\text{U2}}$;
- identifying the deformation of the tyre casing $\text{Def}_\%$ generated by the load, using one of the following formulae:

$$Def_\% = \frac{N^{U1}}{O} * \frac{\left[S^+ + \left(\gamma^{reference1} - \gamma^{refernce2}\right) * N^{TdR2}\right]}{\left(N^{TdR2} * \gamma^{reference1}\right)}$$
;

or

$$Def_\% = \frac{N^{U1}}{O} * \frac{\left(S^-\right)}{\left(N^{TdR2} * \gamma^{reference1}\right)}$$
;

or

$$Def_\% = \frac{N^{U1}}{O} * \frac{\left[S^+ + S^- + \left(\gamma^{reference1} - \gamma^{reference2}\right) * N^{TdR2}\right]}{2 * \left(N^{TdR2} * \gamma^{reference1}\right)}$$

18. Method for obtaining a load applied to a tyre casing according to any of Claims 1 to 17, wherein the bijective function F (1001, 1002, 1003) is an affine function or a power function using the following formulae:

$$F(U) = A * U + B \ ;$$

or

$$F(U) = X * (U)^{Y} \ ;$$

where (A, B) or (X, Y) are parameters related to the mounted assembly.

19. Method for obtaining a load applied to a tyre casing according to the preceding claim, wherein, with the mounted assembly being inflated to the inflation pressure P, the parameters A or X are at least dependent on the inflation pressure P, determining the load Z applied to the mounted assembly comprises determining the inflation pressure P of the mounted assembly.

20. Method for obtaining a load applied to a tyre casing according to the preceding claim, wherein the parameters A or X are an affine function of the inflation pressure P using the following formula:

$$A = a1 * P + a2 \ ;$$

or

$$X = x1 * P + x2 \ ;$$

where (a1, a2) or (x1, x2) are coefficients related to the mounted assembly.

21. Method for obtaining a load applied to a tyre casing according to any of Claims 19 to 20, wherein the parameters B or Y are at least dependent on the inflation pressure P.

22. Method for obtaining a load applied to a tyre casing according to the preceding claim, wherein the parameters B or Y are an affine function of the inflation pressure P using the following formula:

$$B = b1 * P + b2 \ ;$$

or

$$Y = y1 * P + y2 \ ;$$

where (b1, b2) or (y1, y2) are coefficients related to the mounted assembly.

Fig. 1

Fig. 2

Fig. 3

Fig. 4

Fig. 5

Fig. 6

Fig. 7

Fig. 8

Fig. 9

Fig. 10

**EP 4 084 972 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017032466 A1
- EP 2774784 A1
- WO 2012091719 A1
- WO 2019020536 A1
- FR 2930196 A1